# EUROPÄISCHE PATENTSCHRIFT

(11) **EP 1 926 771 B1**
(45) Veröffentlichungstag und Bekanntmachung des Hinweises auf die Patenterteilung: **27.05.2009**
(21) Anmeldenummer: 06792027.2
(22) Anmeldetag: 13.09.2006
(51) Int. Cl.: C08K 5/5333

(54) **VERWENDUNG VON PHOSPHONSÄUREDIESTERN UND DIPHOSPHONSÄUREDIESTERN SOWIE SILANGRUPPENHALTIGE, HÄRTBARE GEMISCHE, ENTHALTEND PHOSPHONSÄUREDIESTER UND DIPHOSPHONSÄUREDIESTER**
USE OF PHOSPHONIC ACID DIESTERS AND DIPHOSPHONIC ACID DIESTERS AND SILANE GROUP-CONTAINING, CURABLE MIXTURES CONTAINING PHOSPHONIC ACID DIESTERS AND DIPHOSPHONIC ACID DIESTERS
UTILISATION DE DIESTERS D'ACIDE PHOSPHONIQUE ET DE DIESTERS D'ACIDE DIPHOSPHONIQUE, AINSI QUE MELANGES DURCISSABLES CONTENANT DES GROUPES SILANE ET CONTENANT DES DIESTERS D'ACIDE PHOSPHONIQUE ET DES DIESTERS D'ACIDE DIPHOSPHONIQUE

(30) Priorität: 22.09.2005 DE 102005045228
(43) Veröffentlichungstag der Anmeldung: 04.06.2008
(73) Patentinhaber: BASF Coatings AG, 48165 Münster (DE)
(72) Erfinder: POPPE, Andreas, 48324 Sendenhorst (DE); WESTHOFF, Elke, 48565 Steinfurt (DE); HESENER, Simone, 48165 Münster (DE); NIEMEIER, Manuela, 48317 Drensteinfurt (DE); STÜBBE, Wilfried, 48268 Greven (DE)
(74) Vertreter: Leifert & Steffan
(86) Internationale Anmeldenummer: PCT/EP2006/008908
(87) Internationale Veröffentlichungsnummer: WO 2007/033786

(56) Entgegenhaltungen:
- EP-A- 1 193 278
- US-A- 4 547 397
- DATABASE WPI Week 198751 Derwent Publications Ltd., London, GB; AN 1987-358800 XP002406145 & JP 62 260868 A (MATSUMOTO SEIYAKU KOGYO KK) 13. November 1987 (1987-11-13)

## Beschreibung

### Gebiet der Erfindung

Die vorliegende Erfindung betrifft die neue Verwendung von Phosphonsäurediestern und Diphosphonsäurediestern als Bestandteil von silangruppenhaltigen Gemischen. Außerdem betrifft die vorliegende Erfindung neue, silangruppenhaltige, härtbare Gemische, die Phosphonsäurediester und Diphosphonsäurediester als Bestandteil enthalten.

### Stand der Technik

Phosphonsäurediester sind Ester der Phosphonsäure [HP(O)(OH)₂], die mit der Phosphorigen Säure [P(OH)₃] tautomer ist. Die Phosphonsäurediester werden häufig nicht ganz korrekt auch als sekundäre Phosphite bezeichnet. Indes sind die echten Derivate der Phosphorigen Säure nur die Triester.

Diphosphonsäurediester sind die Diester der Diphosphonsäure:

(HO)(O)PH-O-PH(O)(OH),

die früher auch als Diphosphorige Säure, bezeichnet wurde.
(vgl. hierzu Römpp Lexikon der Chemie, Georg Thieme Verlag, Stuttgart, New York, 1990, »hosphite«, »hosphonate«, »Phosphonsäure«, »Diethylphosphit« und »Dimethylphosphit«).

Silangruppenhaltige, wasserfreie, thermisch härtbare Gemische, insbesondere Beschichtungsstoffe, die durch Polykondensation über die Silangruppen vernetzen können, sind aus der internationalen Patentanmeldung WO 2004/072189 A2 oder den europäischen Patentanmeldungen EP 0 267 689 A2 und EP 1 193 278 A1 bekannt.

Die bekannten, silangruppenhaltigen, wasserfreien, thermisch härtbaren Gemische enthalten gegebenenfalls mit Aminen blockierte saure Phosphorsäureester, gegebenenfalls mit Aminen blockierte Sulfonsäuren, organische Zinnverbindungen, wie Dibutylzinndilaurat, Dibutylzinndiacetat, Zinnoctoat oder Dibutylzinnoxid, Amine, wie Triethylamin, Tetramethylguanidin oder Triethylendiamin, sowie Titan-, Zinn(II)-, Zink- oder Bismutverbindungen als Katalysatoren der thermischen Härtung.

Jeder dieser Katalysatoren weist aber spezifischer Nachteile auf.

So zeigen die stark sauren Katalysatoren unerwünscht starke Wechselwirkungen mit üblichen und bekannten Lichtschutzmitteln, wie sie in thermisch härtbaren Gemischen, insbesondere Beschichtungsstoffen, verwendet werden. Außerdem können sie die Lagerstabilität der bekannten, silangruppenhaltigen, wasserfreien, thermisch härtbaren Gemische soweit erniedrigen, dass letztere vorzeitig gelieren.

Die metallhaltigen Katalysatoren und die Aminkatalysatoren führen häufig zu Vergilbungen, was sich insbesondere bei Klarlackierungen störend bemerkbar macht, die aus den bekannten, silangruppenhaltigen, wasserfreien, thermisch härtbaren Gemischen hergestellt worden sind.

### Aufgabenstellung

Der vorliegenden Erfindung liegt die Aufgabe zugrunde, eine neue Verwendung von Phosphonsäurediestern und Diphosphonsäurediestern zu finden und so deren Verwendbarkeit zu verbreitern, um die Technik zu bereichern.

Außerdem liegt der vorliegenden Erfindung die Aufgabe zugrunde, neue silangruppenhaltige Gemische zu finden, die Phosphonsäurediester und/oder Diphosphonsäurediester enthalten.

Die neuen silangruppenhaltigen Gemische sollen sich einfach herstellen lassen auch bei Temperaturen oberhalb der Raumtemperatur, beispielsweise bei 40°C, für längere Zeit, mindestens aber vier Wochen, lagerstabil sein. Vorzugsweise sollen sie jedoch so reaktiv sein, dass sie auch unter den Bedingungen der Automobilserienlackierung (OEM) problemlos und rasch gehärtet werden können, beispielsweise bei 100 bis 160°C während 10 bis 60 Minuten.

Nicht zuletzt sollen die neuen, silangruppenhaltigen Gemische, insbesondere die Beschichtungsstoffe, thermisch gehärtete Materialien, insbesondere Beschichtungen, liefern, die besonders hart, abriebfest, hoch kratzfest, besonders chemikalienbeständig und etchbeständig sowie als Klarlackierungen besonders hochglänzend und klar sind.

### Lösung

Demgemäß wurde die neue Verwendung von Phosphonsäurediestern und/oder Diphosphonsäurediestern (A) in silangruppenhaltigen Gemischen gefunden, was im Folgenden als »erfindungsgemäße Verwendung« bezeichnet wird.

Außerdem wurden die neuen silangruppenhaltigen Gemische gefunden, die
(A) mindestens einen Phosphonsäurediester und/oder mindestens einen Diphosphonsäurediester und
(B) mindestens eine Verbindung, enthaltend mindestens zwei kondensierbare Silangruppen,
enthalten und die im Folgenden als »erfindungsgemäße Gemische« bezeichnet werden.

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Verwendung und der erfindungsgemäßen Gemische gelöst werden konnte.

Insbesondere war es überraschend, dass die erfindungsgemäße Verwendung die Anwendungsmöglichkeiten von Phosphonsäurediestern und Diphosphonsäurediestern (A) außerordentlich verbreiterte, wodurch die Technik bereichert wurde.

Insbesondere gestattete die erfindungsgemäße Verwendung die Bereitstellung neuartiger, härtbarer, insbesondere thermisch härtbarer Gemische, die sich durch die Polykondensation von kondensierbaren Silangruppen härten ließen.

Außerdem war es überraschend, dass aufgrund der erfindungsgemäßen Verwendung die Polykondensation von Silangruppen enthaltenden Verbindungen besonders rasch und problemlos ablief.

Die erfindungsgemäßen Gemische ließen sich einfach herstellen und waren auch bei Temperaturen oberhalb der Raumtemperatur, beispielsweise bei 40°C, für längere Zeit, mindestens aber vier Wochen, lagerstabil. Dennoch waren sie so reaktiv, dass sie auch unter den Bedingungen der Automobilserienlackierung (OEM) problemlos und rasch gehärtet werden konnten, beispielsweise bei 100 bis 160°C während 10 bis 60 Minuten.

Nicht zuletzt war es überraschend, dass die erfindungsgemäßen Gemische neue thermisch gehärtete Gemische, insbesondere neue Beschichtungen, lieferten, die besonders hart, besonders abriebfest, hoch kratzfest, besonders chemikalienbeständig und etchbeständig sowie als Klarlackierungen besonders hochglänzend und klar waren.

### Ausführliche Beschreibung der Erfindung

Erfindungsgemäß werden die Phosphonsäurediester (A) als Bestandteil von silangruppenhaltigen Gemischen verwendet.

Für die erfindungsgemäße Verwendung werden die Phosphonsäurediester und die Diphosphonsäurediester (A) vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestem, ausgewählt.

Bevorzugt werden die acyclischen Phosphonsäurediester (A) aus der Gruppe, bestehend aus acyclischen Phosphonsäurediestern (A) der allgemeinen Formel I: 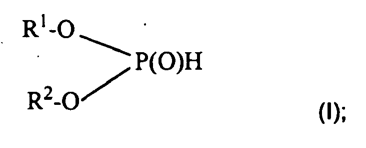 ausgewählt.

In der allgemeinen Formel I sind die Reste R¹ und R² gleich oder voneinander verschieden; vorzugsweise sind sie gleich.

Die Reste R¹ und R² werden aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen, wobei der Strich jeweils die kovalente Bindung zwischen einem Kohlenstoffatom des Rests R¹ oder R² und dem Sauerstoffatom der O-P-Gruppe symbolisiert;
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthaltenen Alkyl-, Cycloalkyl- und Arylgruppen jeweils die vorstehend aufgeführte Anzahl von Kohlenstoffatomen enthalten und
wobei der Strich jeweils die kovalente Bindung zwischen einem Kohlenstoffatom des Rests R¹ und R² und dem Sauerstoffatom der O-P-Gruppe symbolisiert; und
- substituiertem und unsubstituiertem Rest- der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom, wobei der Strich die kovalente Bindung zwischen einem Kohlenstoffatom des Rests und dem Sauerstoffatom der O-P-Gruppe symbolisiert;
ausgewählt.

Bevorzugt werden die cyclischen Phosphonsäurediester (A) aus der Gruppe, bestehend aus den cyclischen Phosphonsäurediestern (A) der allgemeinen Formel II: 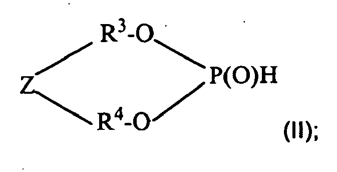 ausgewählt.

In der allgemeinen Formel II sind die Reste R³ und R⁴ gleich oder voneinander verschieden; vorzugsweise sind sie gleich.

Die Reste R³ und R⁴ werden aus der Gruppe, bestehend aus:
- substituiertem und unsubstituiertem, zweibindigem Alkyl- mit 1 bis 20, vorzugsweise 1 bis 10 und insbesondere 1 bis 6 Kohlenstoffatomen, Cycloalkyl- mit 3 bis 20, vorzugsweise 3 bis 10 und insbesondere 3 bis 6 Kohlenstoffatomen und Aryl- mit 5 bis 20, vorzugsweise 6 bis 14 und insbesondere 6 bis 10 Kohlenstoffatomen, wobei der Strich jeweils die kovalente Bindung zwischen einem Kohlenstoffatom des Rests R³ oder R⁴ und dem Sauerstoffatom der O-P-Gruppe symbolisiert;
- substituiertem und unsubstituiertem, zweibindigem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
wobei der Strich jeweils die kovalente Bindung zwischen einem Kohlenstoffatom des Rests R³ und R⁴ und dem Sauerstoffatom der O-P-Gruppe symbolisiert; und
- substituiertem und unsubstituiertem, zweibindigem Rest- der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, wobei der Strich die kovalente Bindung zwischen einem Kohlenstoffatom des Rests und dem Sauerstoffatom der O-P-Gruppe symbolisiert;
ausgewählt.

In der allgemeinen Formel II steht die Variable Z für
- eine kovalente Bindung zwischen einem Atom des Rests R³ und einem Atom des Rests R⁴;
- eine zweibindige, verknüpfende Gruppe, ausgewählt aus der Gruppe, bestehend aus Sauerstoffatom, substituiertem, insbesondere mit Sauerstoff substituiertem, und unsubstituiertem Schwefelatom, substituiertem, insbesondere mit Alkyl substitiuiertem, Stickstoffatom, substituiertem, insbesondere mit Sauerstoff substituiertem, Phosphoratom und substituiertem, insbesondere mit Alkyl und Alkoxy substituiertem Siliziumatom, insbesondere Sauerstoffatom; oder
- eine zweibindige, verknüpfende Gruppe, ausgewählt aus der Gruppe, bestehend aus substituiertem und unsubstituiertem, mindestens ein Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom, enthaltendem oder von Heteroatomen freiem Alkyl mit 1 bis 10, vorzugsweise 1 bis 6 und insbesondere 1 bis 4 Kohlenstoffatomen, Cycloalkyl mit 3 bis 10, vorzugsweise 3 bis 6 und insbesondere 6 Kohlenstoffatomen und Aryl mit 5 bis 10 und insbesondere 6 Kohlenstoffatomen.

Bevorzugt werden die acyclischen Diphosphonsäurediester (A) aus der Gruppe, bestehend aus den acyclischen Diphosphonsäurediestern (A) der allgemeinen Formel III:

(R¹-O)(O)PH-O-PH(O)(O-R²) (III);

worin die Variablen die vorstehend angegebene Bedeutung haben, ausgewählt.

Bevorzugt werden die cyclischen Diphosphonsäurediester (A) aus der Gruppe, bestehend aus den cyclischen Diphosphonsäurediestern (A) der allgemeinen Formel IV: 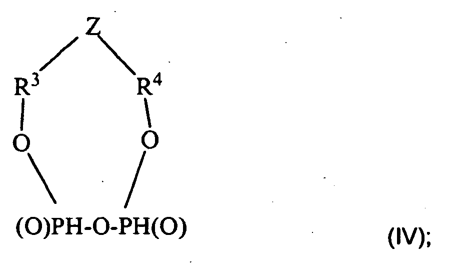 worin die Variablen die vorstehend angegebene Bedeutung haben, ausgewählt.

Als Substituenten für die Reste R¹, R², R³ und R⁴ kommen alle Gruppen und Atome in Betracht, die die Wirkung der Phosphonsäurediester und der Diphosphonsäurediester (A) nicht beeinträchtigen, die Härtungsreaktionen in den erfindungsgemäßen Gemischen nicht inhibieren, nicht zu unerwünschten Nebenreaktionen führen und keine toxische Wirkung hervorrufen. Beispiele geeigneter Substituenten sind Halogenatome, Nitrilgruppen oder Nitrogruppen, bevorzugt Halogenatome, insbesondere Fluoratome, Chloratome und Bromatome.

Vorzugsweise sind die Reste R¹, R², R³ und R⁴ unsubstituiert.

Bevorzugt werden die Reste R¹ und R² aus der Gruppe, bestehend aus Phenyl, Methyl und Ethyl, ausgewählt. Besonders bevorzugt wird Phenyl verwendet.

Bevorzugt werden die acyclischen Phosphonsäurediester (A) der allgemeinen Formel I verwendet.

Besonders bevorzugt werden die Reste R¹ und R² der acyclischen Phosphonsäurediester (A) der allgemeinen Formel I aus der Gruppe, bestehend aus Phenyl, Methyl und Ethyl, ausgewählt. Insbesondere wird Phenyl verwendet.

Ein Beispiel für einen ganz besonders gut geeigneten Phosphonsäurediester (A) der allgemeinen Formel I ist Diphenylphosphonat, das manchmal von der Fachwelt (nicht ganz korrekt) auch als Diphenylphosphit bezeichnet wird.

Als silangruppenhaltige Gemische im Sinne der Erfindung kommen insbesondere organische, silangruppenhaltige Gemische in Betracht. Die Silangruppen der Gemische können mit monomeren, oligomeren oder polymeren Grundstrukturen verknüpft sein. Die Silangruppen können insbesondere als Siloxangruppen auch selbst die Bausteine der Grundstrukturen bilden. Sie können außerdem reaktionsträge oder inert sein. Vorzugsweise sind sie reaktionsfähig, insbesondere im Sinne von Hydrolyse- und/oder Kondensationsreaktionen.

Ein besonderer Vorteil der erfindungsgemäßen Verwendung ist, dass die Phosphonsäurediester (A) ihre hervorragenden Wirkungen in silangruppenhaltigen Gemischen bereits in vergleichsweise geringen Mengen entfalten.

Die erfindungsgemäßen Gemische enthalten obligatorisch,
(A) mindestens einen, insbesondere einen, der vorstehend beschriebenen Phosphonsäurediester und
(B) mindestens eine, insbesondere eine, Verbindung, enthaltend mindestens zwei, insbesondere mindestens drei, kondensierbare Silangruppen.

Darüber hinaus können sie noch mindestens einen weiteren Bestandteil (C) enthalten.

In einer gegebenen Verbindung (B) ist eine Grundstruktur mit mindestens zwei, insbesondere mindestens drei, kondensierbaren Silangruppen verknüpft.

Vorzugsweise haben die kondensierbare Silangruppen die allgemeine Formel V:

**-SiR⁵ₘR⁶₃₋ₘ** (V),

worin der Index und die Variablen die folgende Bedeutung haben:
- m: ganze Zahl von 1 bis 3, insbesondere 3;
- R⁵: einbindiges, kondensierbares Atom oder einbindiger, kondensierbarer, organischer Rest;
- R⁶: einbindiger, inerter, organischer Rest.

Vorzugsweise werden die einbindigen, kondensierbaren Atome aus der Gruppe, bestehend aus Wasserstoffatomen, Fluoratomen, Chloratomen und Bromatomen, ausgewählt.

Vorzugsweise werden die einbindigen, kondensierbaren, organischen Reste R⁵ aus der Gruppe, bestehend aus Hydroxylgruppen und den Gruppen der allgemeinen Formel VI:

**-R⁷-R⁶** (VI),

worin die Variable R⁷ für ein zweibindiges, verknüpfendes Atom oder eine zweibindige, verknüpfende, funktionelle Gruppe steht und R⁶ die vorstehend angegebene Bedeutung hat.

Vorzugsweise werden die einbindigen, inerten, organischen Reste R⁶ aus der Gruppe, bestehend aus
- einbindigem, substituiertem und unsubstituiertem Alkyl vorzugsweise mit 1 bis 20, bevorzugt 2 bis 16 und insbesondere 2 bis 10 Kohlenstoffatomen, Cycloalkylvorzugsweise mit 3 bis 20, bevorzugt 3 bis 16 und insbesondere 3 bis 10 Kohlenstoffatomen und Aryl- vorzugsweise mit 5 bis 20, bevorzugt 6 bis 14 und insbesondere 6 bis 10 Kohlenstoffatomen;
- einbindigem, substituiertem und unsubstituiertem Alkylaryl, Arylalkyl, Alkylcycloalkyl, Cycloalkylalkyl, Arylcycloalkyl, Cycloalkylaryl, Alkylcycloalkylaryl, Alkylarylcycloalkyl, Arylcycloalkylalkyl, Arylalkylcycloalkyl, Cycloalkylalkylaryl und Cycloalkylarylalkyl, wobei die hierin enthalten Alkyl-, Cycloalkyl- und Arylgruppen vorzugsweise jeweils die vorstehend aufgeführte Anzahl von Kohlenstoffatomen enthalten; und
- einbindigem, substituiertem und unsubstituiertem Rest der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom;
wobei die vorstehend beschriebenen Substituenten in Betracht kommen, ausgewählt.

Bevorzugt werden die zweibindigen, verknüpfenden Atome R⁷ aus der Gruppe, bestehend aus Sauerstoffatomen und Schwefelatomen, insbesondere Sauerstoffatomen, ausgewählt.

Bevorzugt werden die zweibindigen, verknüpfenden, funktionellen Gruppen R⁷ aus der Gruppe, bestehend aus -C(=R⁸)-, -R⁷-C(=R⁸)-, -C(=R⁸)-R⁷-, -NH- und -N(-R⁶)-, ausgewählt, worin die Variable R⁸ für ein zweibindiges Atom steht, worin die Variable R⁷ die vorstehend angegebene Bedeutung hat und insbesondere für ein Sauerstoffatom oder ein Schwefelatom steht und die Variable R⁶ die vorstehend angegebene Bedeutung hat und wobei "=" eine Doppelbindung symbolisiert und die durch den linken äußeren Ergänzungsstrich symbolisierte kovalente Bindung die Gruppe der allgemeinen Formel VI mit dem Siliziumatom der Gruppe der allgemeinen Formel V verknüpft.

Insbesondere werden die zweibindigen Atome R⁸ aus der Gruppe, bestehend aus Sauerstoffatomen und Schwefelatomen, insbesondere Sauerstoffatomen, ausgewählt.

Ganz besonders bevorzugt werden die zweibindigen, verknüpfenden Atome R⁷ verwendet.

Insbesondere werden die Silangruppen der allgemeinen Formel V aus der Gruppe, bestehend aus Trimethoxysilyl- und Triethoxysilyl-Gruppen, ausgewählt.

Die Verbindungen (B) können monomer, oligomer oder polymer aufgebaut sein, d. h., sie können eine monomere, eine oligomere oder eine polymere Grundstruktur aufweisen.

»Monomer« bedeutet, dass die betreffende Verbindung (B) bzw. ihre Grundstruktur im Wesentlichen aus einer Struktureinheit oder aus zwei Struktureinheiten, die gleich oder voneinander verschieden sein können, aufgebaut ist.

»Oligomer« bedeutet, dass die betreffende Verbindung (B) bzw. ihre Grundstruktur im statistischen Mittel aus 3 bis 12 monomeren Struktureinheiten, die gleich oder voneinander verschieden sein können, aufgebaut ist.

»Polymer« bedeutet, dass die betreffende Verbindung (B) bzw. ihre Grundstruktur im statistischen Mittel aus mindestens 8 monomeren Struktureinheiten, die gleich oder voneinander verschieden sein können, aufgebaut ist.

Ob eine Verbindung (B) bzw. ihre Grundstruktur, die im statistischen Mittel aus 8 bis 12 monomeren Struktureinheiten aufgebaut ist, vom Fachmann als Oligomer oder als Polymer angesehen wird, richtet sich insbesondere nach dem zahlenmittleren und massenmittleren Molekulargewicht einer solchen Verbindung (B) oder Grundstruktur. Sind die Molekulargewichte vergleichsweise hoch, wird man von einem Polymeren sprechen, sind sie vergleichsweise niedrig, von einem Oligomeren.

Die monomeren Grundstrukturen der Verbindungen (B) leiten sich von üblichen und bekannten, niedermolekularen, organischen Verbindungen ab.

Die oligomeren und polymeren Grundstrukturen der Verbindungen (B) leiten sich vorzugsweise von den üblichen und bekannten, organischen und metallorganischen Oligomeren und Polymeren ab. Diese können die unterschiedlichsten Strukturen haben. Beispielsweise können sie linear, sternförmig, kammförmig oder unregelmäßig verzweigt, dendrimer oder ringförmig sein, wobei mehr als eine dieser Strukturen in einer Verbindung (B) vorliegen kann. Dabei können die Strukturen eine statistische und/oder blockförmige Verteilung der monomeren Struktureinheiten aufweisen.

Bevorzugt leiten sich die oligomeren und polymeren Grundstrukturen der Verbindungen (B) von den üblichen und bekannten, durch radikalische, anionische oder kationische Polymerisation olefinisch oder acetylenisch, vorzugsweise olefinisch, ungesättigter Monomere herstellbaren Oligomeren und Polymeren, durch Polykondensation herstellbaren Oligomeren und Polymeren oder durch Polyaddition herstellbaren Oligomeren und Polymeren ab.

Besonders bevorzugt leiten sich die oligomeren und polymeren Grundstrukturen der Verbindungen (B) von den üblichen und bekannten Polyolefinen, Polystyrolen, Polyacrylnitrilen, (Meth)Acrylat(co)polymerisaten, Polyestern, Polyamiden, Polyphenylenoxiden und Polyurethanen ab.

Besonders bevorzugt enthalten die Grundstrukturen der Verbindungen (B) mindestens eine Gruppe und insbesondere mindestens zwei Gruppen, ausgewählt aus der Gruppe, bestehend aus den Gruppen der allgemeinen Formeln (VII 1), (VII 2) und (VII 3):

**-R¹⁰-R¹¹-R¹²-** (VII 1),

**-R¹⁰-R¹¹-R¹²=** (VII 2)

und

**-R¹⁰-R¹¹-R¹²<** (VII 3),

worin die Variablen R¹⁰, R¹¹ und R¹² die nachstehend bei der allgemeinen Formel VII im Detail erläuterte Bedeutung haben.

Ganz besonders bevorzugt haben die Verbindungen (B) die allgemeinen Formel VII:

**R⁹{-R¹⁰-R¹¹-R¹²[-R¹³]ₙ[-R¹⁴(-R¹⁵)ₒ]ₚ}_{q}** (VII),

worin die Indizes und die Variablen die folgende Bedeutung haben:
- n: 0 oder 1;
- o: 1, 2 oder 3;
- p: 1 oder 2;
- q: ganze Zahl von 1 bis 10, mit der Maßgabe, dass o = 2 oder 3 und/oder p = 2, wenn q = 1;
- R⁹: mindestens einbindiger, vorzugsweise mindestens zweibindiger und insbesondre mindestens dreibindiger, inerter, organischer Rest mit der Maßgabe dass o = 2 oder 3 und/oder p = 2, wenn R⁹ = einbindiger, organischer Rest;
- R¹⁰: in der ersten Alternative = Gruppe -NH-, mit der Maßgabe, dass
(i) die Gruppen R¹² über die durch die linken äußeren Ergänzungsstriche symbolisierten kovalenten Bindungen mit dem Kohlenstoffatom der Gruppe R¹¹ verknüpft sind und durch die durch die rechten äußeren Ergänzungsstriche, durch "<" oder durch "=" symbolisierten kovalenten Bindungen mit den Resten R¹⁴ oder R¹⁴ und R¹³ verknüpft sind;
   oder
   in der zweiten Alternative = Gruppen R¹², mit den Maßgaben, dass
(ii) die mit R¹⁴ direkt verknüpfte Gruppe R¹² = -NH- und
(iii) die Gruppen R¹² über die durch die linken äußeren Ergänzungsstriche symbolisierten kovalenten Bindungen mit dem Kohlenstoffatom der Gruppe R¹¹ verknüpft sind und durch die durch die rechten äußeren Ergänzungsstriche, durch "<" oder durch "=" symbolisierten kovalenten
Bindungen mit den Resten R⁹ verknüpft sind;
- R¹¹: Gruppe -C(=R⁸)-, worin "=R⁸" die vorstehend angegebene Bedeutung hat;
- R¹²: zweibindiges oder dreibindiges Atom, ausgewählt aus der Gruppe, bestehend aus zweibindigen, verknüpfenden Atomen R⁷ und dreibindigen Stickstoffatomen -N< und -N=, worin "=" eine Doppelbindung symbolisiert; oder
zweibindige oder dreibindige, verknüpfende, funktionelle Gruppe, ausgewählt aus der Gruppe, bestehend aus -NH-, -N(-R⁶)- -NH-C(=R⁸)-, -NH[-C(=R⁸)-]₂, -NH-C(=R⁸)-NH-, -NH-C(=R⁸)-R⁷-, -NH-C(=R⁸)-NH-C(=R⁸)-R⁷-, -R⁷-N=, - R⁷-NH-C(=R⁸)- und -NH-C(=R⁸)-NH-N=C<, worin "=R⁸", R⁷ und R⁶ die vorstehend angegebene Bedeutung haben;
- R¹³: einbindiger, inerter, organischer Rest R³ oder Gruppe der allgemeinen Formel VIII:

**-R¹⁴(-F¹⁵)ₒ** (VIII),

worin der Index o die vorstehend angegebene Bedeutung hat und die Reste R¹⁴ und R¹⁵ die nachstehend angegebene Bedeutung haben;
- R¹⁴: mindestens zweibindiger, inerter, organischer Rest;
- R¹⁵: Silangruppe der allgemeinen Formel V.

Vorzugsweise werden die mindestens einbindigen Reste R⁹ aus der Gruppe, bestehend aus
- mindestens einbindigem, substituiertem und unsubstituiertem Alkyl vorzugsweise mit 1 bis 20, bevorzugt 2 bis 16 und insbesondere 2 bis 10 Kohlenstoffatomen, Cycloalkyl- vorzugsweise mit 3 bis 20, bevorzugt 3 bis 16 und insbesondere 3 bis 10 Kohlenstoffatomen und Aryl- vorzugsweise mit 5 bis 20, bevorzugt 6 bis 14 und insbesondere 6 bis 10 Kohlenstoffatomen;
- mindestens einbindigem, substituiertem und unsubstituiertem Alkylaryl, Arylalkyl, Alkylcycloalkyl, Cycloalkylalkyl, Arylcycloalkyl, Cycloalkylaryl, Alkylcycloalkylaryl, Alkylarylcycloalkyl, Arylcycloalkylalkyl, Arylalkylcycloalkyl, Cycloalkylalkylaryl und Cycloalkylarylalkyl, wobei die hierin enthalten Alkyl-, Cycloalkyl- und Arylgruppen vorzugsweise jeweils die vorstehend aufgeführte Anzahl von Kohlenstoffatomen enthalten; und
- mindestens einbindigem, substituiertem und unsubstituiertem Rest der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom;
wobei die vorstehend beschriebenen Substituenten in Betracht kommen, ausgewählt.

Vorzugsweise ist der Rest R¹⁰ eine-NH-Gruppe (= erste Alternative).

Vorzugsweise ist der Rest R¹¹ eine -C(=O)-Gruppe.

Vorzugsweise werden die Reste R¹² aus der Gruppe, bestehend aus dreibindigen Stickstoffatomen -N< und zweibindigen, verknüpfenden, funktionellen Gruppen -N(-R⁶)-, worin die Variable R⁶ die vorstehend angegebene Bedeutung, bevorzugt Methyl, Ethyl, Propyl, Isopropyl, n-Butyl, Isobutyl, sec.-Butyl und tert.- Butyl, insbesondere n-Butyl, hat, ausgewählt.

Bevorzugt sind die Reste R¹² über die durch die linken äußeren Ergänzungsstriche symbolisierten kovalenten Bindungen mit dem Kohlenstoffatom der Gruppe R¹¹ verknüpft und durch die durch die rechten äußeren Ergänzungsstriche oder durch "<" symbolisierten kovalenten Bindungen mit den Resten R¹⁴ oder R¹⁴ und R¹³ verknüpft (= erste Alternative).

Vorzugsweise werden die mindestens zweibindigen, insbesondere zweibindigen, Reste R¹⁴ aus der Gruppe, bestehend aus
- mindestens zweibindigem, substituiertem und unsubstituiertem Alkyl vorzugsweise mit 1 bis 20, bevorzugt 2 bis 16 und insbesondere 2 bis 10 Kohlenstoffatomen, Cycloalkyl- vorzugsweise mit 3 bis 20, bevorzugt 3 bis 16 und insbesondere 3 bis 10 Kohlenstoffatomen und Aryl- vorzugsweise mit 5 bis 20, bevorzugt 6 bis 14 und insbesondere 6 bis 10 Kohlenstoffatomen;
- mindestens zweibindigem, substituiertem und unsubstituiertem Alkylaryl, Arylalkyl, Alkylcycloalkyl, Cycloalkylalkyl, Arylcycloalkyl, Cycloalkylaryl, Alkylcycloalkylaryl, Alkylarylcycloalkyl, Arylcycloalkylalkyl, Arylalkylcycloalkyl, Cycloalkylalkylaryl und Cycloalkylarylalkyl, wobei die hierin enthalten Alkyl-, Cycloalkyl- und Arylgruppen vorzugsweise jeweils die vorstehend aufgeführte Anzahl von Kohlenstoffatomen enthalten; und
- mindestens zweibindigem, substituiertem und unsubstituiertem Rest der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom;
wobei die vorstehend beschriebenen Substituenten in Betracht kommen, ausgewählt. Insbesondere wird Propan-1,3-diyl verwendet.

Die vorstehend beschriebenen Verbindungen (B) können nach den üblichen und bekannten Verfahren der siliziumorganischen Chemie hergestellt werden.

Vorzugsweise sind sie herstellbar, indem man
(a) in einer ersten Alternative mindestens eine Verbindung der allgemeinen Formel IX:

   **R⁹(-N=C=R⁸)_{q}** (IX),

   worin der Index q und die Variable R⁹ die vorstehend angegebene Bedeutung haben und R⁸ für ein Sauerstoffatom oder ein Schwefelatom steht, mit mindestens einer Verbindung der allgemeinen Formel X:

   **H-R¹²[-R¹³]ₙ[-R¹⁴(-R¹⁵)ₒ]ₚ** (X),

   worin die Indizes und die Variablen die vorstehend angegebene Bedeutung haben, umsetzt
   oder
(b) in einer zweiten Alternative mindestens eine Verbindung der allgemeinen Formel XI:

   **R⁹(-R¹²-H)_{q}** (XI),

   worin der Index und die Variablen die vorstehend angegebene Bedeutung haben, mit mindestens einer Verbindung der allgemeinen Formel XII:

   **R⁸=C=N-R¹⁴(-R¹⁵)ₒ** (XII),

   worin der Index und die Variablen die vorstehend angegebene Bedeutung haben, umsetzt.

Vorzugsweise wird die erste Alternative (a) angewandt.

Vorzugsweise wird bei den beiden Alternativen (a) und (b) ein Äquivalentverhältnis der komplementären, reaktiven, funktionellen Gruppen

**-N=C=R⁸ : -R¹²-H**

nahe 1, bevorzugt 1,5 : 1 bis 1 : 1,5, besonders bevorzugt 1,3 : 1 bis 1 : 1,3 und insbesondere 1,2 : 1 bis 1 : 1,2 angewandt.

Beispiele geeigneter Verbindungen der allgemeinen Formel X sind
- Monoisocyanate, wie Ethyl-, Propyl-, Butyl-, Pentyl-, Hexyl -, Heptyl-, Octyl-, Nonyl-, Decyl-, Undecyl-, Lauryl-, Cyclohexyl- oder Phenylisocyanat;
- Diisocyanate, wie Tetramethylen-1,4-diisocyanat, Hexamethylen-1,6-diisocyanat, 2,2,4-Trimethylhexamethylen-1,6-diisocyanat, omega,omega'-Dipropyl-äther-diisocyanat, Cyclohexyl-1,4-diisocyanat, Cyclohexyl-1,3-diisocyanat, Cyclohexyl-1,2-diisocyanat, Dicyclohexylmethan-4,4'-diisocyanat, 1,5-Dimethyl-2,4-di(isocyanatomethyl)-benzol, 1,5-Di-methyl-2,4-di(isocyanatoethyl)-benzol, 1,3,5-Trimethyl-2,4-di(isocyanatomethyl)-benzol, 1,3,5-Triethyl-2,4-di(isocyanatomethyl)-benzol, Isophorondiisocyanat, Dicyclohexyldimethylmethan-4,4'-diisocyanat, 2,4-Toluyiendiisocyanat, 2,6-Toluylendiisocyanat, Diphenylmethan-4,4'-diisocyanat; und
- Polyisocyanate, wie Triisocyanate wie Nonantriisocyanat (NTI) sowie Polyisocyanate auf der Basis der vorstehend beschriebenen Diisocyanate und Triisocyanate, insbesondere Oligomere, die Isocyanurat-, Biuret-, Allophanat-, Iminooxadiazindion-, Urethan-, Carbodiimid-, Harnstoff- und/oder Uretdiongruppen enthalten, beispielsweise aus den Patentschriften und Patentanmeldungen CA 2,163,591 A1, US 4,419,513 A, US 4,454,317 A, EP 0 646 608 A1, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A, US 5,290,902 A, EP 0 649 806 A , DE 42 29 183 A1 oder EP 0 531 820 A1 bekannt sind und vorteilhafterweise eine NCO-Funktionalität von 2,0 - 5,0, vorzugsweise von 2,2 - 4,0, insbesondere von 2,5 - 3,8 haben;
- die hochviskosen Polyisocyanate, wie sie in der deutschen Patentanmeldung DE 198 28 935 A1 beschrieben werden; sowie
- die aus der deutschen Patentanmeldung DE 199 24 170 A1, Spalte 2, Zeile 6 bis 34, Spalte 4, Zeile 16, bis Spalte 6, Zeile 62, die aus den internationalen Patentanmeldungen WO 00/31194, Seite 11, Zeile 30, bis Seite 12, Zeile 26, und WO 00/37520, Seite 5, Zeile 4, bis Seite 6, Zeile 27, und die aus der europäischen Patentanmeldung EP 0 976 723 A2, Seite 12, Absatz [0128], bis Seite 22, Absatz [0284], bekannten Polyisocyanate.

Beispiele geeigneter Verbindungen der allgemeinen Formel XI sind N,N-Bis(3-trimethoxysilylpropan-1-yl)amin, N,N-Bis(3-triethoxysilylpropan-1-yl)amin, N-(3-trimethoxysilylpropan-1-yl)-N-n-butylamin oder N-(3-triethoxysilylpropan-1-yl)-N-n-butylamin.

Beispiele geeigneter Verbindungen der allgemeinen Formel XII sind die üblichen und bekannten, aliphatischen, cycloaliphatischen, aromatischen, aliphatisch-cycloaliphatischen, aliphatisch-aromatischen oder aliphatisch-cycloaliphatisch-aromatischen, mindestens eine Hydroxylgruppe, mindestens eine Thiolgruppe und/oder mindestens eine primäre und/oder sekundäre Aminogruppe enthaltenden Alkohole, Thiole, Thioalkohole, Phenole, Amine, Aminoalkohole, Aminothiole oder Aminothioalkohole.

Beispiele für geeignete Verbindungen der allgemeinen Formel XIII sind 3-Trimethoxysilylpropan-1-yl-isocyanat oder 3-Triethoxysilylpropan-1-yl-isocyanat.

Methodisch weist die Herstellung der Verbindungen (B) keine Besonderheiten auf, sondern erfolgt mit Hilfe der üblichen und bekannten Methoden und Vorrichtungen zur Handhabung und Umsetzung von Polyisocyanaten und organischen Siliciumverbindungen, wobei die üblichen und bekannten Vorsichtsmaßnahmen zur Handhabung von Polyisocyanaten getroffen werden.

Im Allgemeinen werden die Verbindungen der allgemeinen Formeln X und XI bzw. XII und XIII so lange miteinander umgesetzt, bis in den betreffenden Reaktionsgemischen mit Hilfe der üblichen und bekannten Methoden für den qualitativen und quantitativen Nachweis von Isocyanatgruppen keine freien Isocyanatgruppen mehr nachweisbar sind.

Nicht zuletzt können die erfindungsgemäßen Gemische noch mindestens einen Zusatzstoff (C) in den üblichen und bekannten, wirksamen Mengen enthalten. Vorzugsweise wird der Zusatzstoff (C) aus der Gruppe, bestehend aus organischen Lösemitteln, von den Verbindungen (B) verschiedenen Vernetzungsmitteln und Bindemitteln, mit aktinischer Strahlung, insbesondere UV-Strahlung, aktivierbaren Verbindungen, organischen und anorganischen, farbigen und unbunten, optisch effektgebenden, elektrisch leitfähigen, magnetisch abschirmenden und fluoreszierenden Pigmenten, transparenten und opaken, organischen und anorganischen Füllstoffen, Nanopartikeln, Stabilisatoren, UV-Absorbern, Lichtschutzmitteln, Radikalfängern, Photoinitiatoren, Initiatoren der radikalischen Polymerisation, Trockenstoffen, Entlüftungsmitteln, Slipadditiven, Polymerisationsinhibitoren, Entschäumern, Emulgatoren und Netzmitteln, Haftvermittlern, Verlaufmitteln, Filmbildehilfsmittein, rheologiesteuernden Additiven und Flammschutzmitteln, ausgewählt.

Bevorzugt werden Stabilisatoren, besonders bevorzugt Glykole, ganz besonders bevorzugt Propylenglykol, Butylglykol und Homologe mit 5 bis 10 Kohlenstoffatomen im Molekül und insbesondere Propylenglykol und Butylglykol verwendet.

Der Gehalt der erfindungsgemäßen Gemische an Phosphonsäurediestern und/oder Diphosphonsäurediestern (A) kann sehr breit variieren und richtet sich nach den Erfordernissen des Einzelfalls, sodass er an diese optimal angepasst werden kann. Vorzugsweise sind die Phosphonsäurediester und/oder Diphosphonsäurediester (A) in einem erfindungsgemäßen Gemisch in einer Menge von 1 bis 40 Gew.-% bevorzugt 2 bis 30 Gew.-% und insbesondere 3 bis 20 Gew.-%, jeweils bezogen auf den Festkörper des erfindungsgemäßen Gemischs, enthalten.

Ebenso kann der Gehalt der erfindungsgemäßen Gemische an Verbindungen (B) sehr breit variieren und den Erfordernissen des Einzelfalls optimal angepasst werden. Vorzugsweise sind die Verbindungen (B) in einem erfindungsgemäßen Gemisch in einer Menge von 60 bis 99 Gew.-%, bevorzugt 70 bis 98 Gew.-% und insbesondere 80 bis 97 Gew.-%, jeweils bezogen auf den Festkörper des erfindungsgemäßen Gemischs, enthalten.

Im Rahmen der vorliegenden Erfindung ist der Festkörper gleich der Summe aller Bestandteile eines erfindungsgemäßen Gemischs, beispielsweise eines härtbaren erfindungsgemäßen Gemischs, die nach der Entfernung der flüchtigen Bestandteile den nichtflüchtigen Rückstand bilden, beispielsweise ein erfindungsgemäßes gehärtetes Material.

Auch der Festkörpergehalt der erfindungsgemäßen Gemische kann sehr breit variieren und daher den Erfordernissen des Einzelfalls optimal angepasst werden. Vorzugsweise liegt der Festkörpergehalt bei 100 Gew.-%, d. h., das erfindungsgemäße Gemisch enthält keine flüchtigen Bestandteile im vorstehend genannten Sinne. Sind solche flüchtigen Bestandteile vorhanden, liegt der Festkörpergehalt, jeweils bezogen auf das erfindungsgemäße Gemisch, vorzugsweise bei 20 bis 80 Gew.-%, bevorzugt 25 bis 70 Gew.-% und insbesondere 30 bis 65 Gew.-%.

Vorzugsweise sind die erfindungsgemäßen Gemische wasserfrei. Dies bedeutet, dass sie allerhöchstens Spuren von Wasser enthalten, die bei ihrer Herstellung über die Bestandteile und/oder bei ihrer Herstellung und/oder Handhabung über die Luftfeuchtigkeit unbeabsichtigt eingetragen werden. Bevorzugt liegt der Wassergehalt unterhalb der Nachweisgrenzen der üblichen und bekannten, qualitativen und quantitativen Methoden der Wasserbestimmung.

Bevorzugt sind die erfindungsgemäßen Gemische härtbar, besonders bevorzugt thermisch härtbar. Insbesondere erfolgt die thermische Härtung durch die Polykondensation der in den erfindungsgemäßen Gemischen enthaltenen kondensierbaren Silangruppen unter der Bildung dreidimensionaler Netzwerke, d. h., neuer duroplastischer Materialien.

Die thermische Härtung durch die Polykondensation durch die in den erfindungsgemäßen Gemischen enthaltenen kondensierbaren Silangruppen kann noch durch andere, übliche und bekannte Mechanismen der thermischen Härtung, bei denen andere komplementäre, reaktive, funktionelle Gruppen als die kondensierbare Silangruppen eingesetzt werden, die physikalische Härtung durch die Verfilmung geeigneter, filmbildender Bestandteile und/oder die Härtung mit aktinischer Strahlung, insbesondere UV-Strahlung, unterstützt werden. Dieser Arten der Härtung dienen der vorteilhaften Variation der für die erfindungsgemäßen Gemische charakteristischen und ihr anwendungstechnisches Eigenschaftsprofil prägenden Härtung über die kondensierbare Silangruppen.

Die erfindungsgemäßen Gemische können in den unterschiedlichsten physikalischen Zuständen und dreidimensionalen Formen vorliegen.

So können die erfindungsgemäßen Gemische bei Raumtemperatur fest oder flüssig bzw. fließfähig sein. Sie können aber auch bei Raumtemperatur fest und bei höheren Temperaturen fließfähig sein, wobei sie vorzugsweise thermoplastisches Verhalten zeigen. Insbesondere können sie konventionelle, organische Lösemittel enthaltende Gemische, wässrige Gemische, im Wesentlichen oder völlig lösemittel- und wasserfreie flüssige Gemische (100%-Systeme), im wesentlichen oder völlig lösemittel- und wasserfreie feste Pulver oder im wesentlichen oder völlig lösemittelfreie Pulversuspensionen (Pulverslurries) sein. Außerdem können sie Einkomponentensysteme, in denen alle Bestandteile nebeneinander in einer Komponente vorliegen, oder Zwei- oder Mehrkomponentensysteme, in denen mindestens ein besonders reaktiver Bestandteil, beispielsweise ein Polyisocyanat oder ein Polyepoxid, in einer separaten Komponente bis kurz vor der Herstellung und Applikation des betreffenden erfindungsgemäßen Gemischs getrennt von den übrigen Bestandteilen vorliegt, sein. Insbesondere sind die erfindungsgemäßen Gemische organische Lösemittel enthaltende Einkomponentensysteme.

Methodisch weist die Herstellung der erfindungsgemäßen Gemische keine Besonderheiten auf, sondern erfolgt durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer gegebenenfalls unter Ausschluss von aktinischer Strahlung. Die Auswahl der für einen gegebenen Einzelfall optimalen Methode richtet vor allem sich nach dem physikalischen Zustand und der dreidimensionalen Form, den das erfindungsgemäße Gemisch haben soll. Soll beispielsweise ein thermoplastisches erfindungsgemäßes Gemisch in der Form einer Folie oder eines Laminats vorliegen, kommt insbesondere die Extrusion durch eine Breitschlitzdüse für die Herstellung des erfindungsgemäßen Gemischs und dessen Formgebung in Betracht.

Im Rahmen des erfindungsgemäßen Verfahrens werden die erfindungsgemäßen Gemische zur Herstellung von neuen gehärteten Materialien, insbesondere neuen duroplastischen Materialien, verwendet, die unterschiedlichsten Verwendungszwecken dienen und im folgenden als »erfindungsgemäße Materialien« bezeichnet werden.

Bevorzugt handelt es sich bei den erfindungsgemäßen Gemischen um Ausgangsprodukte für Formteile und Folien oder um Beschichtungsstoffe, Klebstoffe und Dichtungsmassen, insbesondere Beschichtungsstoffe.

Bevorzugt handelt es sich bei den erfindungsgemäßen Materialien um neue Formteile, Folien, Beschichtungen, Klebschichten und Dichtungen, insbesondere neue Beschichtungen.

Insbesondere werden die erfindungsgemäßen Beschichtungsstoffe als neue Elektrotrauchlacke, Füller, Steinschlagschutzgrundierungen, Unidecklacke, Wasserbasislacke und/oder Klarlacke, insbesondere Klarlacke, zur Herstellung neuer farb- und/oder effektgebender, elektrisch leitfähiger, magnetisch abschirmender oder fluoreszierender Mehrschichtlackierungen, insbesondere farb- und/oder effektgebender Mehrschichtlackierungen, eingesetzt. Für die Herstellung der erfindungsgemäßen Mehrschichtlackierungen können die üblichen und bekannten Nass-in-nass-Verfahren und/oder Extrusionsverfahren sowie die üblichen und bekannten Lack- oder Folienaufbauten angewandt werden.

Zur Herstellung der erfindungsgemäßen Materialien werden die erfindungsgemäßen Gemische auf übliche und bekannte temporäre oder permanente Substrate appliziert.

Vorzugsweise werden für die Herstellung der erfindungsgemäßen Folien und Formteile übliche und bekannte temporäre Substrate verwendet, wie Metall- und Kunststoffbänder und -folien oder Hohlkörper aus Metall, Glas, Kunststoff, Holz oder Keramik, die leicht entfernt werden können, ohne dass die aus den erfindungsgemäßen Gemischen hergestellten erfindungsgemäße Folien und Formteile beschädigt werden.

Werden die erfindungsgemäßen Gemische für die Herstellung der erfindungsgemäßen Beschichtungen, Klebstoffe und Dichtungen verwendet, werden permanente Substrate eingesetzt, wie Karosserien von Fortbewegungsmitteln, insbesondere Kraftfahrzeugkarosserien, und Teile hiervon, Bauwerke im Innen- und Außenbereich und Teile hiervon, Türen, Fenster, Möbel, Glashohlkörper, Coils, Container, Emballagen, Kleinteile, optische, mechanische und elektrotechnische Bauteile sowie Bauteile für weiße Ware. Die erfindungsgemäßen Folien und Formteile können ebenfalls als permanente Substrate dienen.

Methodisch weist die Applikation der erfindungsgemäßen Gemische keine Besonderheiten auf, sondern kann durch alle üblichen und bekannten, für das jeweilige erfindungsgemäße Gemisch geeigneten Applikationsmethoden, wie z.B. Extrudieren, Elektrotauchlackieren, Spritzen, Sprühen, inklusive Pulversprühen, Rakeln, Streichen, Gießen, Tauchen, Träufeln oder Walzen erfolgen. Vorzugsweise werden Extrusions- und Spritzapplikationsmethoden, insbesondere Spritzapplikationsmethoden, angewandt.

Nach ihrer Applikation werden die erfindungsgemäßen Gemische in üblicher und bekannter Weise thermisch gehärtet.

Die thermische Härtung erfolgt im Allgemeinen nach einer gewissen Ruhezeit oder Ablüftzeit. Sie kann eine Dauer von 30 s bis 2 h, vorzugsweise 1 min bis 1 h und insbesondere 1 bis 45 min haben. Die Ruhezeit dient beispielsweise zum Verlauf und zur Entgasung von Schichten aus den erfindungsgemäßen Gemischen und zum Verdunsten von flüchtigen Bestandteilen wie gegebenenfalls vorhandenem Lösemittel und/oder Wasser.

Die Ablüftung kann durch eine erhöhte Temperatur, die zu einer Härtung noch nicht ausreicht, und/oder durch eine reduzierte Luftfeuchtigkeit beschleunigt werden.

Diese Verfahrensmaßnahme wird auch zur Trocknung der applizierten erfindungsgemäßen Gemische, insbesondere der Schichten aus den erfindungsgemäßen Beschichtungsstoffen, speziell der Schichten aus den erfindungsgemäßen Lackschichten, angewandt, die nicht oder nur partiell gehärtet werden sollen.

Die thermische Härtung erfolgt beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Die Härtung kann auch stufenweise erfolgen. Vorzugsweise erfolgt die thermische Härtung bei Temperaturen von Raumtemperatur bis 200°C, bevorzugt von Raumtemperatur bis 180°C und insbesondere von Raumtemperatur bis 160°C.

Die thermische Härtung kann noch durch die vorstehend beschriebenen zusätzlichen Härtungsmethoden unterstützt werden, wozu gegebenenfalls die üblichen und bekannten Vorrichtungen, beispielsweise zur Härtung mit aktinischer Strahlung, insbesondere UV Strahlung, verwendet werden.

Die resultierenden erfindungsgemäßen Materialien, insbesondere die resultierenden erfindungsgemäßen Folien, Formteile, Beschichtungen, Klebschichten und Dichtungen, eignen sich hervorragend für das Beschichten, Verkleben, Abdichten, Umhüllen und Verpacken von Karosserien von Fortbewegungsmitteln, insbesondere Kraftfahrzeugkarosserien, und Teilen hiervon, Bauwerken im Innen- und Außenbereich und Teilen hiervon, Türen, Fenstern, Möbeln, Glashohlkörpern, Coils, Container, Emballagen, Kleinteilen, wie Muttern, Schrauben, Felgen oder Radkappen, optischen Bauteilen, mechanischen Bauteilen, elektrotechnischen Bauteilen, wie Wickelgüter (Spulen, Statoren, Rotoren), sowie Bauteilen für weiße Ware, wie Radiatoren, Haushaltsgeräte, Kühlschrankverkleidungen oder Waschmaschinenverkleidungen.

Die erfindungsgemäßen Gemische bieten ganz besonderer Vorteile, wenn sie als erfindungsgemäße Klarlacke zur Herstellung von neuen Klarlackierungen verwendet werden.

Bei den erfindungsgemäßen Klarlackierungen handelt es sich üblicherweise um die äußersten Schichten von Mehrschichtlackierungen oder Folien bzw. Laminaten, die wesentlich den optischen Gesamteindruck (Appearance) bestimmen und die Substrate und/oder die farb- und/oder effektgebenden Schichten von Mehrschichtlackierungen oder Folien bzw. Laminaten vor mechanischer und chemischer Schädigung und Schädigung durch Strahlung schützen. Deswegen machen sich auch Defizite in der Härte, Kratzfestigkeit, Chemikalienbeständigkeit und der Stabilität gegenüber Vergilbung bei der Klarlackierung besonders stark bemerkbar. So aber weisen die hergestellten erfindungsgemäßen Klarlackierungen nur eine geringe Vergilbung auf. Sie sind hoch kratzfest und zeigen nach dem Zerkratzen nur sehr geringe Glanzverluste. Insbesondere ist der Glanzverlust im Waschstraßensimulationstest nach Amtec/Kistler sehr gering. Gleichzeitig haben sie eine hohe Härte und eine besonders hohe Chemikalienfestigkeit. Nicht zuletzt weisen sie eine hervorragende Substrathaftung und Zwischenschichthaftung auf.

### Beispiele

### Herstellbeispiel 1

### Die Herstellung der Verbindung (B1)

In einem Reaktionsgefäß, ausgerüstet mit Rührer, Rückflusskühler, Ölheizung und Stickstoffeinleitungsrohr, wurden 456,38 Gewichtsteile eines handelsüblichen Polyisocyanats (Basonat® HI 100 der Firma BASF Aktiengesellschaft) und 228 Gewichtsteile eines handelsüblichen aromatischen Lösemittelgemischs (Solventnaphta®) vorgelegt. Zu dieser Mischung wurden unter Rühren langsam 815,62 Gewichtsteile N,N-Bis(3-trimethoxysilylpropan-1-yl)amin (Dynasilan® 1124 der Firma Degussa) hinzu gegeben. Anschließend wurde das Reaktionsgemisch während zwei Stunden unter Rühren auf 50°C erhitzt. Hiernach waren IR-spektroskopisch keine freien Isocyanatgruppen mehr nachweisbar. Die Lösung der Verbindung (B1) wies einen Festkörpergehalt von 84 bis 85 Gew.-% auf.

### Herstellbeispiel 2

### Die Herstellung der Verbindung (B2)

In einem Reaktionsgefäß, ausgerüstet mit Rührer, Rückflusskühler, Ölheizung und Stickstoffeinleitungsrohr, wurden 82 Gewichtsteile eines handelsüblichen Polyisocyanats (Vestanat® T 1890 der Firma Degussa) und 82 Gewichtsteile eines handelsüblichen aromatischen Lösemittelgemischs (Solventnaphta®) vorgelegt. Zu dieser Mischung wurden unter Rühren langsam 86 Gewichtsteile N-(3-Trimethoxysilylpropan-1-yl)-N-n-butylamin (Dynasilan® 1189 der Firma Degussa) hinzu gegeben. Anschließend wurde das Reaktionsgemisch während zwei Stunden unter Rühren auf 50°C erhitzt. Hiernach waren IR-spektroskopisch keine freien Isocyanatgruppen mehr nachweisbar. Die Lösung der Verbindung (B2) wies einen Festkörpergehalt von 52 bis 53 Gew.-% auf.

### Herstellbeispiel 3

### Die Herstellung der Verbindung (B3)

In einem Reaktionsgefäss, ausgerüstet mit Rührer, Rückflusskühler, Ölheizung und Stickstoffeinleitungsrohr, wurden 48,38 Gewichtsteile eines handelsüblichen Polyisocyanats (Vestanat® T 1890 der Firma Degussa) und 48,38 Gewichtsteile eines handelsüblichen aromatischen Lösemittelgemischs (Solventnaphta®) vorgelegt. Zu dieser Mischung wurden unter Rühren langsam 32,82 Gewichtsteile N-(3-Trimethoxysilylpropan-1-yl)-N-n-butylamin (Dynasilan® 1189 der Firma Degussa) und 20,42 Gewichtsteile N,N-Bis(3-trimethoxysilylpropan-1-yl)amin (Silquest® A 1170 der Firma Witco ) hinzu gegeben. Anschließend wurde das Reaktionsgemisch während zwei Stunden unter Rühren auf 50°C erhitzt. Hiernach waren IR-spektroskopisch keine freien Isocyanatgruppen mehr nachweisbar. Die Lösung der Verbindung (B3) wies einen Festkörpergehalt von 58 Gew.-% auf.

### Herstellbeispiel 4

### Die Herstellung des Zusatzstoffs (C1)

In einem Reaktionsgefäß, ausgerüstet mit Rührer, Rückflusskühler, zwei Zulaufgefäßen und Ölheizung, wurden 71,04 Gewichtsteile Solventnaphtha® vorgelegt und unter Rühren auf 145°C erhitzt. Anschließend wurden bei dieser Temperatur aus dem einen Zulaufgefäß ein Gemisch aus 100,1 Gewichtsteile Methylmethacrylat und 6,79 Gewichtsteilen Isodecylmethacrylat während zwei Stunden unter Rühren gleichmäßig zudosiert. Gleichzeitig beginnend, wurde aus dem anderen Zulaufgefäß eine Lösung von 25,96 Gewichtsteilen tert.- Butylhydroperoxid in 49,4 Gewichtsteile Solventnaphtha® während fünf Stunden unter Rühren gleichmäßig zudosiert. Nach der Beendigung des zweiten Zulaufs wurde das Reaktionsgemisch noch während 1,5 Stunden 145°C nachpolymerisiert. Die resultierende Methacrylatharzlösung wies einen Festkörpergehalt von 47 Gew.-% auf. Die Molekulargewichtsverteilung des Methacrylatharzes wurde Mithilfe der Gelpermeationschromatographie mit Polystyrol als internem Standard bestimmt. Der Restmonomerengehalt wurde mittels Gaschromatographie gemessen. Es wurden die folgenden Ergebnisse erhalten:

| | |
|---|---|
| Massenmittleres Molekulargewicht: | 2.874 Dalton; |
| Zahlenmittleres Molekulargewicht: | 1.132 Dalton; |
| Molekulargewicht am Peakmaximum: | 2.876 Dalton; |
| Uneinheitlichkeit des Molekulargewichts: | 2,5 und |
| Restmonomerengehalt: | ≤ 0,5 Gew.-%. |

### Beispiel 1

### Die Herstellung des Einkomponentenklarlacks 1 und der Mehrschichtlackierungen 1 (Silber) und 1 (Schwarz), jeweils umfassend die Klarlackierung 1

Der Einkomponentenklarlack 1 wurde durch Vermischen von 92 Gewichtsteilen der Verbindung (B2) des Herstellbeispiels 2, 0,5 Gewichtsteilen des handelsüblichen Lackadditivs Byk® 301 der Firma Byk Chemie, 1,1 Gewichtsteilen des handelsüblichen Lichtschutzmittels Tinuvin® 384 der Firma Ciba Specialty Chemicals, 1 Gewichtsteil des handelsüblichen Lichtschutzmittels Tinuvin® 292 der Firma Ciba Specialty Chemicals, 25 Gewichtsteilen Solventnaphtha®, 0,25 Gewichtsteilen des handelsüblichen Lackadditivs Byk® 390 der Firma Byk Chemie und 8 Gewichtsteilen Diphenylphosphonat (Diphenylphosphit) und Homogenisieren der resultierende Mischung hergestellt.

Der Einkomponentenklarlack 1 war lagerstabil; er konnte problemlos während vier Wochen bei 40°C gelagert werden, ohne dass ein Anstieg seiner Viskosität zu beobachten war.

Der Einkomponentenklarlack 1 wurde auf Prüfbleche appliziert, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren. Die Basislackschicht und die Klarlackschicht wurden gemeinsam während 22 Minuten bei 140°C gehärtet. Die resultierende Basislackierung wies eine Schichtdicke von 7,5 µm und die Klarlackierung eine Schichtdicke von 30 µm auf.

Die Chemikalienbeständigkeit wurde durch den üblichen und bekannten Gradientenofentest und durch den üblichen und bekannten Test GME 604409 bestimmt, bei dem 38-prozentige Schwefelsäure während 72 Stunden bei Raumtemperatur auf die Mehrschichtlackierungen einwirkt. Die Resultate wurden visuell beurteilt und mit Noten von 1 bis 10 benotet. Ab einer Note 8 war das Testergebnis in Ordnung.

Die Kratzfestigkeit wurde durch den Waschstraßensimulationstest mit einer Laborwaschstraße der Firma Amtec Kistler bestimmt (vgl. T. Klimmasch, T. Engbert, Technologietage, Köln, DFO, Berichtsband 32, Seiten 59 bis 66, 1997). Die Beanspruchung wurde durch Messen des Restglanzes der Probe nach dem Waschstraßensimulationstest und nachfolgendem Abwischen mit einem mit Waschbenzin getränktem Wischtuch bestimmt.

Außerdem wurde die Kratzfestigkeit mit dem Crockmeter (9 µm Papierkörnung) bestimmt.

Die Ergebnisse finden sich in der Tabelle 1.

**Tabelle 1: Chemikalienbeständigkeit und Kratzfestigkeit der Mehrschichtlackierungen 1 (Silber) und 1 (Schwarz)**

| **Test** | **Mehrschichtlackierung** | |
|---|---|---|
| | **1 (Silber)** | **1 (Schwarz)** |
| **Chemikalienbeständigkeit** | | |
| Gradientenofentest: | | |
| (Beginn der Beschädigung nach 24 Stunden bei °C) | | |
| Schwefelsäure | 51 | 47 |
| NaOH | 70 | 55 |
| Pankreatin | 43 | 50 |
| Baumharz | > 75 | > 75 |
| destilliertes Wasser | 55 | > 75 |

| GME 60409: | | |
|---|---|---|
| Oberflächenveränderung Nach 72 Stunden | nicht gemessen | Note 9 |
| | | |

| **Kratzfestigkeit** | | |
|---|---|---|
| | | |
| Amtec/Kistler: | | |
| Anfangsglanz (20°) | nicht gemessen | 85 |
| Glanz (20°) ohne Reinigung | nicht gemessen | 38 |
| Glanz (20°) nach Reinigung | nicht gemessen | 58 |
| | | |
| Reflow (2 Stunden/80°C): | | |
| Glanz (20°) ungereinigte Seite | nicht gemessen | 41 |
| Glanz (20°) gereinigte Seite | nicht gemessen | 60 |

| Crockmeter: | | |
|---|---|---|
| Restglanz (%) | nicht gemessen | 67 |

Die Ergebnisse untermauern die überraschend hohe Chemikalienbeständigkeit der Mehrschichtlackierungen 1 (Silber) und 1 (Schwarz) sowie den hohen Glanz und die hohe Kratzfestigkeit der Mehrschichtlackierung 1 (Schwarz). Eine Messung der Kratzfestigkeit der Mehrschichtlackierung 1 (Silber) wurde deshalb nicht durchgeführt, weil für die Bestimmung der Kratzfestigkeit üblicherweise schwarze Lackierungen verwendet werden, bei denen das Schadensbild sehr viel besser zu erkennen ist als bei silbernen Lackierungen.

### Beispiel 2

### Die Herstellung des Einkomponentenklarlacks 2 und der Mehrschichtlackierung 2 (Schwarz), umfassend die Klarlackierung 2

Der Einkomponentenklarlack 1 wurde durch Vermischen von 100 Gewichtsteilen der Verbindung (B3) des Herstellbeispiels 3, 0,5 Gewichtsteilen des handelsüblichen Lackadditivs Byk® 358 der Firma Byk Chemie, 1,1 Gewichtsteilen des handelsüblichen Lichtschutzmittels Tinuvin® 384 der Firma Ciba Specialty Chemicals, 1 Gewichtsteil des handelsüblichen Lichtschutzmittels Tinuvin® 292 der Firma Ciba Specialty Chemicals, 25 Gewichtsteilen Solventnaphtha®, 3 Gewichtsteilen Butylglykoldiacetat und 8 Gewichtsteilen Diphenylphosphonat und Homogenisieren der resultierende Mischung hergestellt.

Der Einkomponentenklarlack 1 war lagerstabil; er konnte problemlos während vier Wochen bei 40°C gelagert werden, ohne dass ein Anstieg seiner Viskosität zu beobachten war.

Der Einkomponentenklarlack 2 wurde auf Prüfbleche appliziert, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren. Die Basislackschicht und die Klarlackschicht wurden gemeinsam während 22 Minuten bei 140°C gehärtet. Die resultierende Basislackierung wies eine Schichtdicke von 7,5 µm und die Klarlackierung eine Schichtdicke von 30 µm auf.

Es wurden dieselben Untersuchungen wie bei Beispiel 1 durchgeführt. Die Ergebnisse finden sich in der Tabelle 2. Sie untermauern die überraschend hohe Chemikalienbeständigkeit sowie den hohen Glanz und die hohe Kratzfestigkeit der Mehrschichtlackierung 2 (Schwarz).

**Tabelle 2: Chemikalienbeständigkeit und Kratzfestigkeit der Mehrschichtlackierung 2 (Schwarz)**

| **Test** | **Mehrschichtlackierung:** |
|---|---|
| | **2 (Schwarz)** |
| **Chemikalienbeständigkeit** | |
| Gradientenofentest: | |
| (Beginn der Beschädigung nach 24 Stunden bei °C) | |
| Schwefelsäure | 47 |
| NaOH | < 37 |
| Pankreatin | 38 |
| Baumharz | > 75 |
| destilliertes Wasser | > 75 |
| | |

| GME 60409: | |
|---|---|
| Oberflächenveränderung | Note 8 |
| nach 72 Stunden | |
| | |

| **Kratzfestigkeit** | |
|---|---|
| Amtec/Kistler: | |
| Anfangsglanz (20°) | 83 |
| Glanz (20°) ohne Reinigung | 42 |
| Glanz (20°) nach Reinigung | 53 |

| Crockmeter: | |
|---|---|
| Restglanz (%) | 78 |

### Beispiel 3

### Die Herstellung des Einkomponentenklarlacks 3 und der Mehrschichtlackierung 3 (Schwarz), umfassend die Klarlackierung 3

Der Einkomponentenklarlack 3 wurde durch Vermischen von 92 Gewichtsteilen der Verbindung (B1) des Herstellbeispiels 1, 45 Gewichtsteilen der Verbindung (B2) des Herstellbeispiels 2, 5 Gewichtsteilen des Zusatzstoffs (C) des Herstellbeispiels 4, 0,5 Gewichtsteilen des handelsüblichen Lackadditivs Byk® 358 der Firma Byk Chemie, 1,1 Gewichtsteilen des handelsüblichen Lichtschutzmittels Tinuvin® 384 der Firma Ciba Specialty Chemicals, 1 Gewichtsteil des handelsüblichen Lichtschutzmittels Tinuvin® 292 der Firma Ciba Specialty Chemicals, 57 Gewichtsteilen Solventnaphtha®, 6 Gewichtsteilen Propylenglykol und 8 Gewichtsteilen Diphenylphosphonat und Homogenisieren der resultierende Mischung hergestellt.

Der Einkomponentenklarlack 3 war lagerstabil; er konnte problemlos während vier Wochen bei 40°C gelagert werden, ohne dass ein Anstieg seiner Viskosität zu beobachten war.

Der Einkomponentenklarlack 3 wurde auf Prüfbleche appliziert, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen schwarzen Wasserbasislack der Firma BASF Coatings AG beschichtet worden waren. Die Basislackschicht und die Klarlackschicht wurden gemeinsam während 22 Minuten bei 140°C gehärtet. Die resultierende Basislackierung wies eine Schichtdicke von 7,5 µm und die Klarlackierung eine Schichtdicke von 30 µm auf.

Es wurden dieselben Untersuchungen wie bei Beispiel 1 durchgeführt. Die Ergebnisse finden sich in der Tabelle 3. Sie untermauern die überraschend hohe Chemikalienbeständigkeit sowie den hohen Glanz und die hohe Kratzfestigkeit der Mehrschichtlackierung 3 (Schwarz).

**Tabelle 3: Chemikalienbeständigkeit und Kratzfestigkeit der Mehrschichtlackierung 3 (Schwarz)**

| **Test** | **Mehrschichtlackierung: 3 (Schwarz)** |
|---|---|
| **Chemikalienbeständigkeit** | |
| Gradientenofentest: | |
| (Beginn der Beschädigung nach 24 Stunden bei °C) | |
| | |
| Schwefelsäure | 52 |
| NaOH | < 37 |
| Pankreatin | 46 |
| Baumharz | > 75 |
| destilliertes Wasser | 51 |
| | |

| GME 60409: | |
|---|---|
| Oberflächenveränderung | Note 8 |
| nach 72 Stunden | |
| | |

| **Kratzfestigkeit** | |
|---|---|
| | |
| Amtec/Kistler: | |
| Restglanz (20°) nach Reinigung | 90% des Anfangsglanzes |

| Crockmeter: | |
|---|---|
| Restglanz (%) | 98 |

Insgesamt zeigen die Ergebnisse der Tabellen 1 bis 3, dass das Eigenschaftsprofil von Einkomponentenklarlacken auf der Basis von Verbindungen (B) und Phosphonsäurediestern (A) in überraschend einfacher Weise variiert und optimiert werden konnte:

## Patentansprüche

1. Verwendung von Phosphonsäurediestern (A) in Gemischen enthaltend kondensierbare Silangruppen.

2. Verwendung nach Anspruch 1, **dadurch gekennzeichnet, dass** die Phosphonsäurediester und die Diphosphonsäurediester (A) aus der Gruppe, bestehend aus acyclischen Phosphonsäurediestern, cyclischen Phosphonsäurediestern, acyclischen Diphosphonsäurediestern, cyclischen Diphosphonsäurediestern und cyclisch-acyclischen Diphosphonsäurediestern, ausgewählt werden.

3. Verwendung nach Anspruch 2, **dadurch gekennzeichnet, dass** die acyclischen Phosphonsäurediester (A) die allgemeine Formel I haben: 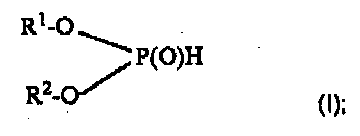 worin die Variablen die folgende Bedeutung haben:
R¹ und R² gleich oder voneinander verschieden und ausgewählt aus der Gruppe, bestehend aus
substituiertem und unsubstituiertem Alkyl- mit 1 bis 20 Kohlenstoffatomen, Cycloalkyl- mit 3 bis 20 Kohlenstoffatomen und Aryl- mit 5 bis 20 Kohlenstoffatomen, wobei der Strich jeweils die kovalente Bindung zwischen einem Kohlenstoffatom des Rests R¹ oder R² und dem Sauerstoffatom der O-P-Gruppe symbolisiert;
substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und wobei der Strich jeweils
die kovalente Bindung zwischen einem Kohlenstoffatom des Rests R¹ und R² und dem Sauerstoffatom der O-P-Gruppe symbolisiert; und
substituiertem und unsubstituiertem Rest- der vorstehend aufgeführten Art, enthaltend mindestens ein Heteroatom, ausgewählt aus der Gruppe, bestehend aus Sauerstoffatom, Schwefelatom, Stickstoffatom, Phosphoratom und Siliziumatom, wobei der Strich die kovalente Bindung zwischen einem Kohlenstoffatom des Rests und dem Sauerstoffatom der O-P-Gruppe symbolisiert;

4. Verwendung nach Anspruch 2, **dadurch gekennzeichnet, dass** die cyclischen Phosphonsäurediester (A) die allgemeinen Formel II haben: 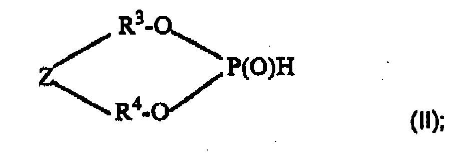 worin die Variablen die folgende Bedeutung haben:
R³ und R⁴ gleich oder voneinander verschieden und ausgewählt aus der Gruppe, bestehend aus
substituiertem und unsubstituiertem, zweibindigem Alkyl- mit 1 bis 20 Kohlenstoffatomen, Cycloalkyl- mit 3 bis 20 Kohlenstoffatomen und Aryl- mit 5 bis 20 Kohlenstoffatomen, wobei der Strich jeweils die kovalente Bindung zwischen einem Kohlenstoffatom des Rests R³ oder R⁴ und dem Sauerstoffatom der O-P-Gruppe symbolisiert;
substituiertem und unsubstituiertem, zweibindigem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und wobei der Strich Jeweils die kovalente Bindung zwischen einem Kohlenstoffatom des Rests R³ und R⁴ und dem Sauerstoffatom der O-P-Gruppe symbolisiert; und
substituiertem und unsubstituiertem, zweibindigem Rest- der vorstehend aufgeführten Art, enthaltend mindestens ein Heteroatom, ausgewählt aus der Gruppe, bestehend aus Sauerstoffatom, Schwefelatom, Stickstoffatom, Phosphoratom und Siliziumatom, wobei der Strich die kovalente Bindung zwischen einem Kohlenstoffatom des Rests und dem Sauerstoffatom der O-P-Gruppe symbolisiert;
Z kovalente Bindung zwischen einem Atom des Rests R³ und einem Atom des Rests R⁴ oder
zweibindige, verküpfende Gruppe, ausgewählt aus der Gruppe, bestehend aus Sauerstoffatom, substituiertem und unsubstituiertem Schwefelatom, substituiertem Stickstoffatom, substituiertem Phosphoratom, substituiertem Siliziumatom, substituiertem und unsubstituiertem, mindestens ein Heteroatom, ausgewählt aus der Gruppe, bestehend aus Sauerstoffatom, Schwefelatom, Stickstoffatom, Phosphoratom und Siliziumatom, enthaltendem und von Heteroatomen freiem Alkyl mit 1 bis 10 Kohlenstoffatomen, Cycloalkyl mit 3 bis 10 Kohlenstoffatomen und Aryl mit 5 bis 10 Kohlenstoffatomen;

5. Verwendung nach Anspruch 2, **dadurch gekennzeichnet, dass** die acyclischen Dlphosphonsäurediester (A) die allgemeine Formel III haben:
(R¹-O)(O)PH-O-PH(O)(O-R²) (III);
worin die Variablen die vorstehend angegebene Bedeutung haben.

6. Verwendung nach Anspruch 2, **dadurch gekennzeichnet, dass** die cyclischen Diphosphonsäurediester (A) die allgemeine Formel IV haben: 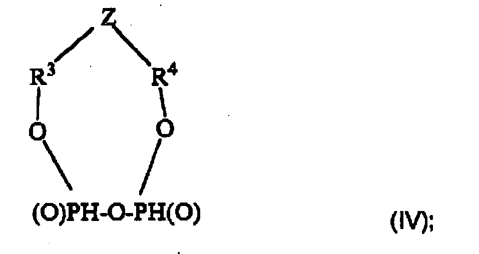 worin die Variablen die vorstehend angegebene Bedeutung haben.

7. Verwendung nach einem der Ansprüche 3 oder 5, **dadurch gekennzeichnet, dass** die Variablen R¹ und R² aus der Gruppe, bestehend aus Phenyl, Methyl und Ethyl, ausgewählt werden.

8. Verwendung nach Anspruch 7, **dadurch gekennzeichnet, dass** R¹ und R² Phenyl sind.

9. Silangruppenhaltige Gemische, enthaltend
(A) mindestens einen Phosphonsäurediester und/oder mindestens einen Diphosphonsäurediester und
(B) mindestens eine Verbindung, enthaltend mindestens zwei kondensierbare Silangruppen.

10. Gemische nach Anspruch 9, **dadurch gekennzeichnet, dass** sie mindestens einen Phosphonsäurediester und/oder mindestens einen Diphosphonsäurediester (A) gemäß einem der Ansprüche 2 bis 8 enthalten.

11. Gemische nach Anspruch 9 oder 10, **dadurch gekennzeichnet, dass** sie mindestens einen Phosphonsäurediester und/oder mindestens einen Dlphosphonsäurediester (A) in einer Menge von 1 bis 40 Gew.-%, bezogen auf den Festkörper eines Gemischs, enthalten.

12. Gemische nach einem der Ansprüche 9 bis 11, **dadurch gekennzeichnet, dass** sie mindestens eine Verbindung (B) in einer Menge von 60 bis 99 Gew.-%, bezogen auf den Festkörper eines Gemischs, enthalten.

13. Gemische nach einem der Ansprüche 9 bis 12, und **dadurch gekennzeichnet, dass** die kondensierbare Silangruppe die allgemeine Formel V hat:
-**SiR⁵ₘR⁵₃₋ₘ** (V),
worin der Index und die Variablen die folgende Bedeutung haben:
m ganze Zahl von 1 bis 3;
R⁵ einbindiges, kondensierbares Atom oder einbindiger, kondensierbarer, organischer Rest;
R⁶ einbindiger, inerter, organischer Rest.

14. Gemische nach Anspruch 13, **dadurch gekennzeichnet, dass** das einbindige, kondensierbare Atom aus der Gruppe bestehend aus und Wasserstoffatomen, Fluoratomen, Chloratomen und Bromatomen gewählt ist; und der einbindige, kondensierbare, organische Rest R⁵ aus der Gruppe, bestehend aus Hydroxylgruppen und den Gruppen der allgemeinen Formel VI:
**-R⁷-R⁶** (VI),
worin die Variable R⁷ für ein zweibindiges, verküpfendes Atom oder eine zweibindige, verknüpfende, funktionelle Gruppe steht und R⁶ die vorstehend angegebene Bedeutung hat, gewählt wird.

15. Gemische nach Anspruch 14, **dadurch gekennzeichnet, dass** das zweibindige, verküpfende Atom R⁷ für ein Sauerstoffatom steht oder aus der Gruppe, bestehend aus -C(=R⁸)-, -R⁷-C(=R⁸)-, -C(=R⁸)-R⁷-, -NH- und -N(-R⁶)-, worin die Variable R⁸ für ein zweibindiges Atom steht, ausgewählt ist, wobei "=" eine Doppelbindung symbolisiert und die durch den linken äußeren Ergänzungsstrich symbolisierte kovalente Bindung die Gruppe der allgemeinen Formel VI mit dem Siliziumatom der Gruppe der allgemeinen Formel V verknüpft.

16. Gemische nach einem der Ansprüche 13 bis 15, **dadurch gekennzeichnet, dass** der einbindige, inerte, organische Rest R⁶ aus der Gruppe, bestehend aus den Resten R¹ oder R², ausgewählt ist.

17. Gemische nach einem der Ansprüche 13 bis 16, **dadurch gekennzeichnet, dass** die Silangruppe der allgemeinen Formel VI aus der Gruppe, bestehend aus Trimethoxysilyl- und Triethoxysilyl-Gruppen, ausgewählt ist.

18. Gemische nach einem der Ansprüche 13 bis 17, **dadurch gekennzeichnet, dass** die Verbindung (B) die allgemeine Formel VII hat
**R⁹{-R¹⁰-R¹¹⁻R¹²[-R¹³]ₙ[-R¹⁴(-R¹⁵)ₒ]ₚ}_{q}** (VII),
worin die indizes und die Variablen die folgende Bedeutung haben:
n 0 oder 1;
o 1, 2 oder 3;
p 1 oder 2;
q ganze Zahl von 1 bis 10, mit der Maßgabe, dass o = 2 oder 3 und/oder p = 2, wenn q = 1;
R⁹ mindestens einbindiger, inerter, organischer Rest mit der Maßgabe dass o = 2 oder 3 und/oder p = 2, wenn R⁹ = einbindiger, organischer Rest;
R¹⁰ in der ersten Alternative = Gruppe -NH-, mit der Maßgabe, dass
(I) die Gruppen R¹² über die durch die linken äußeren Ergänzungsstriche symbolisierten kovalenten Bindungen mit dem Kohlenstoffatom der Gruppe R¹¹ verknüpft sind und durch die durch die rechten äußeren Ergänzungsstriche, durch "<" oder durch "=" symbolisierten kovalenten Bindungen mit den Resten R¹⁴ oder R¹⁴ und R¹³ verknüpft sind;
oder
in der zweiten Alternative = Gruppen R¹², mit den Maßgaben, dass
(II) die mit R¹⁴ direkt verknüpfte Gruppe R¹² = -NH- und
(III) die Gruppen R¹² über die durch die linken äußeren Ergänzungsstriche symbolisierten kovalenten Bindungen mit dem Kohlenstoffatom der Gruppe R¹¹ verknüpft sind und durch die durch die rechten äußeren Ergänzungsstriche, durch "<" oder durch "=" symbolisierten kovalenten Bindungen mit den Resten R⁹ verknüpft sind;
R¹¹ Gruppe -C(=R⁸)-, worin "=R⁸" die vorstehend angegebene Bedeutung hat;
R¹² zweibindiges oder dreibindiges Atom, ausgewählt aus der Gruppe, bestehend aus zweibindigen, verküpfenden Atomen R⁷ und dreibindigen Stickstoffatomen -N< und -N=, worin "=" eine Doppelbindung symbolisiert; oder
zweibindige oder dreibindige, verküpfende, funktionelle Gruppe, ausgewählt aus der Gruppe, bestehend aus -NH-, -N(-R⁶)- -NH-C(=R⁸)-, -NH[-C(=R⁸)-]₂,-NH-C(=⁸)-NH-, -NH-C(=R⁸)-R⁷-, -NH-C(=⁸)-NH-C(=R⁸)-R⁷-, -R⁷-N=, - R⁷-NH-C(=R⁸)- und -NH-C(=R⁸)-NH-N=C<, worin "=R⁸", R⁷ und R⁸ die vorstehend angegebene Bedeutung haben;
wobei die durch den linken äußeren Ergänzungsstrich symbolisierte kovalente Bindung das Atom oder die Gruppe R⁷ mit dem Kohlenstoffatom der Gruppe R¹¹ verknüpft;
R¹³ einbindiger, inerter, organischer Rest R⁶ oder Gruppe der allgemeinen Formel VIII:
**-R¹⁴(-R¹⁸)ₒ** (VIII),
worin der index o die vorstehend angegebene Bedeutung hat und die Reste R¹⁴ und R¹⁵ die nachstehend angegebene Bedeutung haben;
R¹⁴ mindestens zweibindiger, inerter, organischer Rest;
R¹⁵ Silangruppe der allgemeinen Formel V.

19. Gemische nach einem der Ansprüche 9 bis 18, **dadurch gekennzeichnet, dass** die Verbindungen (B) herstellbar sind, indem man
(a) in einer ersten Alternative mindestens eine Verbindung der allgemeinen Formel IX:
**R⁹(N=C=R⁸)_{q}** (IX),
worin der index q und die Variable R⁹ die vorstehend angegebene Bedeutung haben und R⁸ für ein Sauerstoffatom oder ein Schwefelatom steht, mit mindestens einer Verbindung der allgemeinen Formel X:
**H-R¹²[-R¹³]ₙ[-R¹⁴(-R¹⁵)ₒ]ₚ** (X),
worin die indizes und die Variablen die vorstehend angegebene Bedeutung haben, umsetzt oder
(b) in einer zweiten Alternative mindestens eine Verbindung der allgemeinen Formel XI:
**R⁹(-R¹²-H)_{q}** (XI),
worin der index und die Variablen die vorstehend angegebene Bedeutung haben, mit mindestens einer Verbindung der allgemeinen Formel XII:
**R⁸=C=N-R¹⁴(R¹⁵)ₒ** (XII),
worin der index und die Variablen die vorstehend angegebene Bedeutung haben, umsetzt.

20. Gemische nach Anspruch 18 oder 19, **dadurch gekennzeichnet, dass** der Rest R¹⁴ aus der Gruppe, bestehend aus den Resten R³ oder R⁴, ausgewählt ist.

21. Gemische nach einem der Ansprüche 9 bis 20, **dadurch gekennzeichnet, dass** sie mindestens einen weiteren Bestandteil (C) enthalten.

22. Gemische nach Anspruch 21, **dadurch gekennzeichnet, dass** der Bestandteil (C) aus der Gruppe, bestehend aus reaktionsfähigen und inerten, oligomeren und polymeren, filmbildenden Bindemitteln; Vernetzungsmitteln; reaktionsfähigen und inerten, organischen und anorganischen Lösemitteln; mit aktinischer Strahlung, insbesondere UV-Strahlung, aktivierbaren Verbindungen; organischen und anorganischen, farbigen und unbunten, optisch effektgebenden, elektrisch leitfähigen, magnetisch abschirmenden und fluoreszierenden Pigmenten; transparenten und opaken, organischen und anorganischen Füllstoffen; Nanopartikeln; Stabilisatoren; UV-Absorbern; Lichtschutzmitteln; Radikalfängern; Photoinitiatoren; Initiatoren der radikalischen Polymerisation; Trockenstoffen; Entlüftungsmitteln; Slipadditiven; Polymerisationsinhibitoren; Entschäumern; Emulgatoren und Netzmitteln; Haftvermittlern; Verlaufmitteln; Filmbildehilfsmitteln; rheologiesteuernden Additiven und Flammschutzmitteln, ausgewählt ist.

23. Gemische nach einem der Ansprüche 9 bis 22, **dadurch gekennzeichnet, dass** sie einen Festkörpergehalt von 20 bis 100 Gew.-% haben.

24. Gemische nach einem der Ansprüche 9 bis 23, **dadurch gekennzeichnet, dass** sie wesserfrei sind.

25. Gemische nach einem der Ansprüche 9 bis 24, **dadurch gekennzeichnet, dass** sie thermisch härtbar sind.

26. Wasserfreie, thermisch härtbare Gemische nach einem der Ansprüche 9 bis 26, **dadurch gekennzeichnet, dass** sie Beschichtungestoffe sind.

## Claims

1. The use of phosphonic diesters (A) in mixtures containing condensable silane groups.

2. The use as claimed in claim 1, wherein the phosphonic diesters and diphosphonic diesters (A) are selected from the group consisting of acyclic phosphonic diesters, cyclic phosphonic diesters, acyclic diphosphonic diesters, cyclic diphosphonic diesters, and cyclic-acyclic diphosphonic diesters.

3. The use as claimed in claim 2, wherein the acyclic phosphonic diesters (A) have the general formula I: 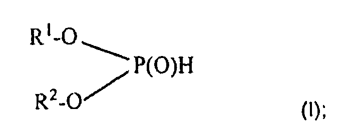 in which the variables have the following definitions:
R¹ and R² are identical or different from one another and are selected from the group consisting of
substituted and unsubstituted alkyl- having 1 to 20 carbon atoms, cycloalkyl- having 3 to 20 carbon atoms, and aryl- having 5 to 20 carbon atoms, the hyphen symbolizing in each case the covalent bond between a carbon atom of the radical R¹ or R² and the oxygen atom of the O-P group;
substituted and unsubstituted alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl-, and cycloalkylarylalkyl-, the alkyl, cycloalkyl-, and aryl groups therein each containing the above-recited number of carbon atoms and the hyphen symbolizing in each case the covalent bond between a carbon atom of the radical R¹ and R² and the oxygen atom of the O-P group; and
substituted and unsubstituted radical- of the above-recited kind, containing at least one heteroatom selected from the group consisting of oxygen atom, sulfur atom, nitrogen atom, phosphorus atom, and silicon atom, the hyphen symbolizing the covalent bond between a carbon atom of the radical and the oxygen atom of the O-P group.

4. The use as claimed in claim 2, wherein the cyclic phosphonic diesters (A) have the general formula II: 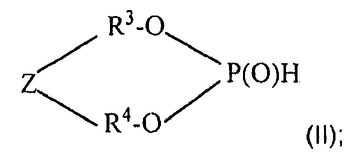 in which the variables have the following definitions:
R³ and R⁴ are identical or different from one another and are selected from the group consisting of
substituted and unsubstituted, divalent alkyl- having 1 to 20 carbon atoms, cycloalkyl- having 3 to 20 carbon atoms, and aryl- having 5 to 20 carbon atoms, the hyphen symbolizing in each case the covalent bond between a carbon atom of the radical R³ or R⁴ and the oxygen atom of the O-P group;
substituted and unsubstituted, divalent alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl-, and cycloalkylarylalkyl-, the alkyl, cycloalkyl-, and aryl groups therein each containing the above-recited number of carbon atoms and the hyphen symbolizing in each case the covalent bond between a carbon atom of the radical R³ and R⁴ and the oxygen atom of the O-P group; and
substituted and unsubstituted, divalent radical- of the above-recited kind, containing at least one heteroatom selected from the group consisting of oxygen atom, sulfur atom, nitrogen atom, phosphorus atom, and silicon atom, the hyphen symbolizing the covalent bond between a carbon atom of the radical and the oxygen atom of the O-P group;
Z is a covalent bond between an atom of the radical R³ and an atom of the radical R⁴ or
is a divalent linking group selected from the group consisting of oxygen atom, substituted and unsubstituted sulfur atom, substituted nitrogen atom, substituted phosphorus atom, substituted silicon atom, substituted and unsubstituted alkyl having 1 to 10 carbon atoms, cycloalkyl having 3 to 10 carbon atoms, and aryl having 5 to 10 carbon atoms, said alkyl, cycloalkyl, and aryl being free from heteroatoms or containing at least one heteroatom selected from the group consisting of oxygen atom, sulfur atom, nitrogen atom, phosphorus atom, and silicon atom.

5. The use as claimed in claim 2, wherein the acyclic diphosphonic diesters (A) have the general formula III:
(R¹-O)(O)PH-O-PH(O)(O-R²) (III);
in which the variables are as defined above.

6. The use as claimed in claim 2, wherein the cyclic diphosphonic diesters (A) have the general formula IV: 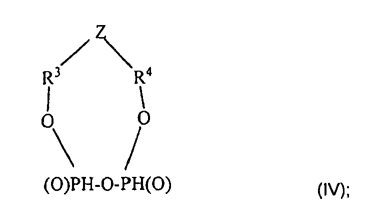 in which the variables are as defined above.

7. The use as claimed in either of claims 3 and 5, wherein the variables R¹ and R² are selected from the group consisting of phenyl, methyl, and ethyl.

8. The use as claimed in claim 7, wherein R¹ and R² are phenyl.

9. A silane-functional mixture comprising
(A) at least one phosphonic diester and/or at least one diphosphonic diester and
(B) at least one compound containing at least two condensable silane groups.

10. The mixture as claimed in claim 9, comprising at least one phosphonic diester and/or at least one diphosphonic diester (A) as set forth in any one of claims 2 to 8.

11. The mixture as claimed in claim 9 or 10, containing at least one phosphonic diester and/or at least one diphosphonic diester (A) in an amount of 1% to 40% by weight, based on the solids of a mixture.

12. The mixture as claimed in any of claims 9 to 11, containing at least one compound (B) in an amount of 60% to 99% by weight, based on the solids of a mixture.

13. The mixture as claimed in any of claims 9 to 12, wherein the condensable silane group has the general formula V:
**-SiR⁵ₘR⁶₃₋ₘ** (V),
in which the index and variables have the following definitions:
m is an integer from 1 to 3;
R⁵ is a monovalent condensable atom or monovalent condensable organic radical;
R⁶ is a monovalent inert organic radical.

14. The mixture as claimed in claim 13, wherein the monovalent condensable atom is selected from the group consisting of hydrogen atoms, fluorine atoms, chlorine atoms, and bromine atoms, and the monovalent condensable organic radical R⁵ is selected from the group consisting of hydroxyl groups and the groups of the general formula VI:
**-R⁷-R⁶** (VI),
in which the variable R⁷ is a divalent linking atom or a divalent linking functional group, and R⁶ is as defined above.

15. The mixture as claimed in claim 14, wherein the divalent linking atom R⁷ is an oxygen atom or is selected from the group consisting of -C(=R⁸)-, -R⁷-C(=R⁸)-, -C(=R⁸)-R⁷-, -NH-, and -N(-R⁶)-, in which the variable R⁸ is a divalent atom, "=" symbolizes a double bond, and the covalent bond symbolized by the left-hand outer hyphen links the group of the general formula VI to the silicon atom of the group of general formula V.

16. The mixture as claimed in any of claims 13 to 15, wherein the monovalent inert organic radical R⁶ is selected from the group consisting of the radicals R¹ or R².

17. The mixture as claimed in any of claims 13 to 16, wherein the silane group of the general formula VI is selected from the group consisting of trimethoxysilyl and triethoxysilyl groups.

18. The mixture as claimed in any of claims 13 to 17, wherein the compound (B) has the general formula VII:
**R⁹{-R¹⁰-R¹¹-R¹²[-R¹³]ₙ[-R¹⁴(-R¹⁵)ₒ]ₚ}_{q}** (VII),
in which the indices and variables have the following definitions:
n is 0 or 1;
o is 1, 2 or 3;
p is 1 or 2;
q is an integer from 1 to 10, with the proviso that o = 2 or 3 and/or p = 2, if q = 1;
R⁹ is an at least monovalent inert organic radical, with the proviso that o = 2 or 3 and/or p = 2, if R⁹ = monovalent organic radical;
R¹⁰ in the first alternative = group -NH-, with the proviso that
(i) the groups R¹² are linked, via the covalent bonds symbolized by the left-hand outer hyphens, to the carbon atom of the group R¹¹ and are linked, by the covalent bonds symbolized by the right-hand outer hyphens, by "<" or by "=", to the radicals R¹⁴ or R¹⁴ and R¹³;
or
in a second alternative = groups R¹², with the provisos that
(ii) the group R¹² linked directly to R¹⁴ = -NH- and
(iii)the groups R¹² are linked, via the covalent bonds symbolized by the left-hand outer hyphens, to the carbon atom of the group R¹¹ and are linked, by the covalent bonds symbolized by the right-hand outer hyphens, by "<" or by "=", to the radicals R⁹;
R¹¹ is a group -C(=R⁸)-, in which "=R⁸" is as defined above;
R¹² is a divalent or trivalent atom selected from the group consisting of divalent linking atoms R⁷ and trivalent nitrogen atoms -N< and -N=, in which "=" symbolizes a double bond; or
is a divalent or trivalent linking functional group selected from the group consisting of -NH-, -N(-R⁶)- -NH-C(=R⁸)-, -NH[-C(=R⁸)-]₂, -NH-C(=R⁸)-NH-, -NH-C(=R⁸)-R⁷-, -NH-C(=R⁸)-NH-C(=R⁸)-R⁷-, -R⁷-N=, -R⁷-NH-C(=R⁸)-, and -NH-C(=R⁸)-NH-N=C<, in which "=R⁸", R⁷, and R⁶ are as defined above;
the covalent bond symbolized by the left-hand outer hyphen linking the atom or the group R⁷ to the carbon atom of the group R¹¹;
R¹³ is a monovalent inert organic radical R⁶ or a group of the general formula VIII:
**-R¹⁴(-R¹⁵)ₒ** (VIII),
in which the index o is as defined above and the radicals R¹⁴ and R¹⁵ are as defined below;
R¹⁴ is an at least divalent inert organic radical;
R¹⁵ is a silane group of the general formula V.

19. The mixture as claimed in any of claims 9 to 18, wherein compounds (B) are preparable by reacting
(a) in a first alternative at least one compound of the general formula IX:
**R⁹(N=C=R⁸)_{q}** (IX),
in which the index q and the variable R⁹ are as defined above and R⁸ is an oxygen atom or a sulfur atom, with at least one compound of the general formula X:
**H-R¹²[-R¹³]ₙ[-R¹⁴(-R¹⁵)ₒ]ₚ** (X),
in which the indices and variables are as defined above, or
(b) in a second alternative at least one compound of the general formula XI:
**R⁹(-R¹²-H)_{q}** (XI),
in which the index and variables are as defined above, with at least one compound of the general formula XII:
**R⁸=C=N-R¹⁴(-R¹⁵)ₒ** (XII),
in which the index and variables are as defined above.

20. The mixture as claimed in claim 18 or 19, wherein the radical R¹⁴ is selected from the group consisting of the radicals R³ or R⁴.

21. The mixture as claimed in any of claims 9 to 20, comprising at least one further constituent (C).

22. The mixture as claimed in claim 21, wherein constituent (C) is selected from the group consisting of reactive and inert, oligomeric and polymeric, film-forming binders; crosslinking agents; reactive and inert, organic and inorganic solvents; compounds which can be activated with actinic radiation, especially UV radiation; organic and inorganic, colored and achromatic, optical effect, electrically conductive, magnetically shielding, and fluorescent pigments; transparent and opaque, organic and inorganic fillers; nanoparticles; stabilizers; UV absorbers; light stabilizers; free-radical scavengers; photoinitiators; free-radical polymerization initiators; driers; devolatilizers; slip additives; polymerization inhibitors; defoamers; emulsifiers and wetting agents; adhesion promoters; flow control agents; film-forming assistants; rheology control additives; and flame retardants.

23. The mixture as claimed in any of claims 9 to 22, having a solids content of 20% to 100% by weight.

24. The mixture as claimed in any of claims 9 to 23, being water-free.

25. The mixture as claimed in any of claims 9 to 24, being thermally curable.

26. The water-free, thermally curable mixture as claimed in any of claims 9 to 25, being a coating material.

## Revendications

1. Utilisation de diesters de l'acide phosphonique (A) dans des mélanges contenant des groupes silanes condensables.

2. Utilisation selon la revendication 1, **caractérisée en ce que** les diesters de l'acide phosphonique et les diesters de l'acide diphosphonique (A) sont choisis dans le groupe constitué par les diesters de l'acide phosphonique acycliques, les diesters de l'acide phosphonique cycliques, les diesters de l'acide diphosphonique acycliques, les diesters de l'acide diphosphonique cycliques et les diesters de l'acide diphosphonique cycliques-acycliques.

3. Utilisation selon la revendication 2, **caractérisée en ce que** les diesters de l'acide phosphonique acycliques (A) ont la formule générale I : 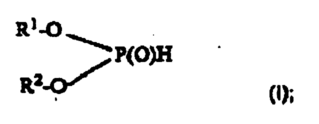 dans laquelle les variables ont la signification suivante :
R¹ et R² identiques ou différents l'un de l'autre et choisis dans le groupe constitué par
alkyl- avec 1 à 20 atomes de carbone, cycloalkyl- avec 3 à 20 atomes de carbone et aryl- avec 5 à 20 atomes de carbone, substitués et non substitués, le tiret symbolisant à chaque fois la liaison covalente entre un atome de carbone du radical R¹ ou R² et l'atome d'oxygène du groupe O-P ;
alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl- et cycloalkylarylalkyl-, substitués et non substitués, les groupes alkyles, cycloalkyles et aryles présents ici contenant à chaque fois le nombre d'atomes de carbone mentionné précédemment et le tiret symbolisant à chaque fois la liaison covalente entre un atome de carbone du radical R¹ et R² et l'atome d'oxygène du groupe O-P ;
radical- substitué et non substitué du type mentionné précédemment, contenant au moins un hétéroatome, choisi dans le groupe constitué par l'atome d'oxygène, l'atome de soufre, l'atome d'azote, l'atome de phosphore et l'atome de silicium, le tiret symbolisant la liaison covalente entre un atome de carbone du radical et l'atome d'oxygène du groupe O-P.

4. Utilisation selon la revendication 2, **caractérisée en ce que** les diesters de l'acide phosphonique cycliques (A) ont la formule générale II : 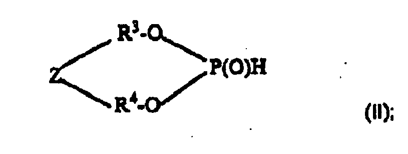 dans laquelle les variables ont la signification suivante :
R³ et R⁴ identiques ou différents l'un de l'autre et choisis dans le groupe constitué par
alkyl- avec 1 à 20 atomes de carbone, cycloalkyl- avec 3 à 20 atomes de carbone et aryl- avec 5 à 20 atomes de carbone, bivalents, substitués et non substitués, le tiret symbolisant à chaque fois la liaison covalente entre un atome de carbone du radical R³ ou R⁴ et l'atome d'oxygène du groupe O-P ;
alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl- et cycloalkylarylalkyl-, bivalents, substitués et non substitués, les groupes alkyles, cycloalkyles et aryles présents ici contenant à chaque fois le nombre d'atomes de carbone mentionné précédemment et le tiret symbolisant à chaque fois la liaison covalente entre un atome de carbone du radical R³ et R⁴ et l'atome d'oxygène du groupe O-P ;
radical- bivalent, substitué et non substitué, du type mentionné précédemment, contenant au moins un hétéroatome, choisi dans le groupe constitué par l'atome d'oxygène, l'atome de soufre, l'atome d'azote, l'atome de phosphore et l'atome de silicium, le tiret symbolisant la liaison covalente entre un atome de carbone du radical et l'atome d'oxygène du groupe O-P ;
Z liaison covalente entre un atome du radical R³ et un atome du radical R⁴ ou
groupe bivalent relié, choisi dans le groupe constitué par l'atome d'oxygène, l'atome de soufre substitué et non substitué, l'atome d'azote substitué, l'atome de phosphore substitué, l'atome de silicium substitué, un alkyle avec 1 à 10 atomes de carbone, substitué et non substitué, contenant au moins un hétéroatome choisi dans le groupe constitué par l'atome d'oxygène, l'atome de soufre, l'atome d'azote, l'atome de phosphore et l'atome de silicium et exempt d'hétéroatomes, un cycloalkyle avec 3 à 10 atomes de carbone et un aryle avec 5 à 10 atomes de carbone ;

5. Utilisation selon la revendication 2, **caractérisée en ce que** les diesters de l'acide diphosphonique acycliques (A) ont la formule générale III :
(R¹-O)(O)PH-O-PH(O)(O-R²) (III) ;
dans laquelle les variables ont la signification donnée précédemment.

6. Utilisation selon la revendication 2, **caractérisée en ce que** les diesters de l'acide diphosphonique cycliques (A) présentent la formule générale IV : 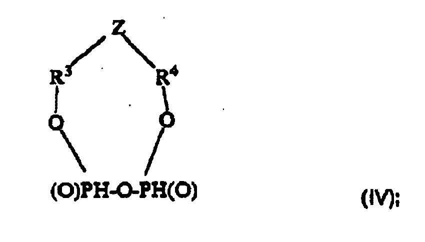 dans laquelle les variables ont la signification donnée précédemment.

7. Utilisation selon l'une quelconque des revendications 3 ou 5, **caractérisée en ce que** les variables R¹ et R² sont choisies dans le groupe constitué par phényle, méthyle et éthyle.

8. Utilisation selon la revendication 7, **caractérisée en ce que** R¹ et R² représentent phényle.

9. Mélanges contenant des groupes silanes, contenant
(A) au moins un diester de l'acide phosphonique et/ou au moins un diester de l'acide diphosphonique et
(B) au moins un composé qui contient au moins deux groupes silanes condensables.

10. Mélanges selon la revendication 9, **caractérisés en ce qu'**ils contiennent au moins un diester de l'acide phosphonique et/ou au moins un diester de l'acide diphosphonique (A) selon l'une quelconque des revendications 2 à 8.

11. Mélanges selon la revendication 9 ou 10, **caractérisés en ce qu'**ils contiennent au moins un diester de l'acide phosphonique et/ou au moins un diester de l'acide diphosphonique (A) en une quantité de 1 à 40 % en poids, par rapport au corps solide d'un mélange.

12. Mélanges selon l'une quelconque des revendications 9 à 11, **caractérisés en ce qu'**ils contiennent au moins un composé (B) en une quantité de 60 à 99 % en poids, par rapport au corps solide d'un mélange.

13. Mélanges selon l'une quelconque des revendications 9 à 12, **caractérisés en ce que** le groupe silane condensable a la formule générale V :
-SiR⁵ₘR⁶₃₋ₘ (V),
dans laquelle l'indice et les variables ont la signification suivante :
m nombre entier de 1 à 3 ;
R⁵ atome monovalent condensable ou radical organique monovalent condensable ;
R⁶ radical organique monovalent inerte

14. Mélanges selon la revendication 13, **caractérisés en ce que** l'atome monovalent condensable est choisi dans le groupe constitué par les atomes d'hydrogène, les atomes de fluor, les atomes de chlore et les atomes de brome ; et le radical organique monovalent condensable R⁵ est choisi dans le groupe constitué par les groupes hydroxyles et les groupes de formule générale VI :
-R⁷-R⁶ (VI),
dans laquelle la variable R⁷ représente un atome bivalent relié ou un groupe fonctionnel bivalent relié et R⁶ a la signification donnée précédemment.

15. Mélanges selon la revendication 14, **caractérisés en ce que** l'atome bivalent relié R⁷ représente un atome d'oxygène ou est choisi dans le groupe constitué par - C(=R⁸)-, -R⁷-C(=R⁸)-, -C(=R⁸)-R⁷-, -NH- et -N(-R⁶)-, la variable R⁸ représentant un atome bivalent, « = » symbolisant une double liaison et la liaison covalente symbolisée par le tiret complémentaire extérieur gauche reliant le groupe de formule générale VI avec l'atome de silicium du groupe de formule générale V.

16. Mélanges selon l'une quelconque des revendications 13 à 15, **caractérisés en ce que** le radical R⁶ organique monovalent inerte est choisi dans le groupe constitué par les radicaux R¹ ou R².

17. Mélanges selon l'une quelconque des revendications 13 à 16, **caractérisés en ce que** le groupe silane de formule générale VI est choisi dans le groupe constitué par les groupes triméthoxysilyles et triéthoxysilyles.

18. Mélanges selon l'une quelconque des revendications 13 à 17, **caractérisés en ce que** le composé (B) a la formule générale VII :
R⁹{-R¹⁰-R¹¹-R¹²[-R¹³]ₙ[-R¹⁴(-R¹⁵)ₒ]ₚ}_{q} (VII),
dans laquelle les indices et les variables ont la signification suivante :
n 0 ou 1 ;
o 1, 2 ou 3 ;
p 1 ou 2 ;
q nombre entier de 1 à 10, à condition que o = 2 ou 3 et/ou p = 2 lorsque q = 1 ;
R⁹ radical organique inerte au moins monovalent, à condition que o = 2 ou 3 et/ou p = 2 lorsque R⁹ = radical organique monovalent ;
R¹⁰ selon la première alternative = groupe -NH-, à condition que
(I) les groupes R¹² soient reliés par les liaisons covalentes symbolisées par les tirets complémentaires extérieurs gauches avec l'atome de carbone du groupe R¹¹ et par les liaisons covalentes symbolisées par les tirets complémentaires extérieurs droits, par « < » ou par « = » avec les radicaux R¹⁴ ou R¹⁴ et R¹³ ;
ou
selon la seconde alternative = groupes R¹², à condition que
(II) le groupe R¹² directement relié avec R¹⁴ = -NH- et
(III) les groupes R¹² soient reliés par les liaisons covalentes symbolisées par les tirets complémentaires extérieurs gauches avec l'atome de carbone du groupe R¹¹ et par les liaisons covalentes symbolisées par les tirets complémentaires extérieurs droits, par « < » ou par « = » avec les radicaux R⁹ ;
R¹¹ groupe -C(=R⁸)-, « =R⁸ » ayant la signification donnée précédemment ;
R¹² atome bivalent ou trivalent, choisi dans le groupe constitué par les atomes R⁷ bivalents reliés et les atomes d'azote trivalents -N< et -N=, « = » symbolisant une double liaison ;
ou
groupe fonctionnel bivalent ou trivalent relié, choisi dans le groupe constitué par -NH-, -N(-R⁶)-, -NH-C(=R⁸)-, -NH[-C(=R⁸)-]₂, -NH-C(=R⁸)-NH-, -NH-C(=R⁸)-R⁷-, -NH-C(=R⁸)-NH-C(=R⁸)-R⁷-, -R⁷-N=, -R⁷-NH-C(=R⁸)- et -NH-C(=R⁸)-NH-N=C<, « =R⁸ », R⁷ et R⁶ ayant la signification donnée précédemment ;
la liaison covalente symbolisée par le tiret complémentaire extérieur gauche reliant l'atome ou le groupe R⁷ avec l'atome de carbone du groupe R¹¹ ;
R¹³ radical R⁶ organique inerte monovalent ou groupe de formule générale VIII :
-R¹⁴(-R¹⁵)ₒ (VIII),
dans laquelle l'indice o a la signification donnée précédemment et les radicaux R¹⁴ et R¹⁵ ont la signification donnée ci-dessous ;
R¹⁴ radical organique inerte, au moins bivalent ;
R¹⁵ groupe silane de formule générale V.

19. Mélanges selon l'une quelconque des revendications 9 à 18, **caractérisés en ce que** les composés (B) peuvent être fabriqués
(a) selon une première alternative, par réaction d'au moins un composé de formule générale IX :
R⁹(N=C=R⁸)_{q} (IX),
dans laquelle l'indice q et la variable R⁹ ont la signification donnée précédemment et R⁸ représente un atome d'oxygène ou un atome de soufre, avec au moins un composé de formule générale X :
H-R¹²[-R¹³]ₙ[-R¹⁴(-R¹⁵)ₒ]ₚ (X),
dans laquelle les indices et les variables ont la signification donnée précédemment, ou
(b) selon une seconde alternative, par réaction d'au moins un composé de formule générale XI :
R⁹(-R¹²-H)_{q} (XI),
dans laquelle l'indice et les variables ont la signification donnée précédemment, avec au moins un composé de formule générale XI :
R⁸=C=N-R¹⁴(-R¹⁵)ₒ (XII),
dans laquelle l'indice et les variables ont la signification donnée précédemment.

20. Mélanges selon la revendication 18 ou 19, **caractérisés en ce que** le radical R¹⁴ est choisi dans le groupe constitué des radicaux R³ ou R⁴.

21. Mélanges selon l'une quelconque des revendications 9 à 20, **caractérisés en ce qu'**ils contiennent au moins un constituant supplémentaire (C).

22. Mélanges selon la revendication 21, **caractérisés en ce que** le constituant (C) est choisi dans le groupe constitué par les liants filmogènes, oligomères et polymères, réactifs et inertes ; les agents de réticulation, les solvants organiques et inorganiques, réactifs et inertes ; les composés activables par rayonnement actinique, notamment par rayonnement UV ; les pigments organiques et inorganiques, colorés et achromatiques, donnant un effet optique, conducteurs électriques, à écran magnétique et fluorescents ; les charges transparentes et opaques, organiques et inorganiques ; les nanoparticules ; les stabilisateurs ; les absorbeurs UV, les agents photoprotecteurs, les capteurs de radicaux ; les photoinitiateurs ; les initiateurs de polymérisation radicalaire ; les dessicatifs ; les agents d'aération ; les additifs de lubrification ; les inhibiteurs de polymérisation ; les antimousses ; les émulsifiants et les tensioactifs ; les adhésifs ; les agents d'écoulement ; les adjuvants filmogènes ; les additifs orientant la rhéologie et les agents ignifuges.

23. Mélanges selon l'une quelconque des revendications 9 à 22, **caractérisés en ce qu'**ils ont une teneur en solides de 20 à 100 % en poids.

24. Mélanges selon l'une quelconque des revendications 9 à 23, **caractérisés en ce qu'**ils sont anhydres.

25. Mélanges selon l'une quelconque des revendications 9 à 24, **caractérisés en ce qu'**ils sont durcissables thermiquement.

26. Mélanges anhydres durcissables thermiquement selon l'une quelconque des revendications 9 à 25, **caractérisés en ce qu'**ils sont des matériaux de revêtement.
